# FASCICULE DE BREVET EUROPEEN

(11) **EP 3 077 335 B1**
(45) Date de publication et mention de la délivrance du brevet: **11.10.2023**
(21) Numéro de dépôt: 14809339.6
(22) Date de dépôt: 02.12.2014
(51) Int. Cl.: C01B 25/22, C05B 11/08, C05B 11/10, C05B 11/12, C01B 25/28, C01B 25/30, C01B 25/32, C01B 25/36, C01B 25/37

(54) **PROCÉDÉ DE PORDUCTION D'UNE SOURCE DE PHOSPHATE POUR L'AGRICULTURE ET L'ALIMENTAIRE**
VERFAHREN ZUR HERSTELLUNG EINER PHOSPHATQUELLE FÜR LANDWIRTSCHAFT UND NAHRUNGSMITTELINDUSTRIE
PROCESS FOR THE PRODUCTION OF A SOURCE OF PHOSPHATE FOR AGRICULTURE AND FOOD INDUSTRY

(30) Priorité: 02.12.2013 WO PCT/EP2013/075251; 02.12.2013 BE 201300806
(43) Date de publication de la demande: 12.10.2016
(73) Titulaire: Prayon, 4480 Engis (BE)
(72) Inventeur: TAKHIM, Mohamed, B-1325 Corroy-le-Grand (BE)
(74) Mandataire: Connor, Marco Tom
(86) Numéro de dépôt international: PCT/EP2014/076250
(87) Numéro de publication internationale: WO 2015/082468

(56) Documents cités:
- WO-A2-2004/002888
- BE-A- 520 114
- CN-A- 1 043 481
- FR-A- 1 058 180
- FR-A2- 2 289 443
- US-A- 2 890 934
- US-A1- 2008 267 850
- CASACUBERTA N ET AL: "Radioactivity contents in dicalcium phosphate and the potential radiological risk to human populations", JOURNAL OF HAZARDOUS MATERIALS, ELSEVIER, AMSTERDAM, NL, vol. 170, no. 2-3, 30 octobre 2009 (2009-10-30), pages 814-823, XP026521204, ISSN: 0304-3894, DOI: 10.1016/J.JHAZMAT.2009.05.037 [extrait le 2009-05-15] cité dans la demande
- RAMAN GOPALIYENGAR ET AL: "N. P. Fertilizer", CHEMICAL ABSTRACTS, CHEMICAL ABSTRACTS SERVICE (C A S), US, 30 janvier 1971 (1971-01-30), XP001468470, ISSN: 0009-2258
- YAMAGUCHI TARO ET AL: "Decomposition of phosphate ore", CHEMICAL ABSTRACTS, CHEMICAL ABSTRACTS SERVICE (C A S), US, 30 juin 1976 (1976-06-30), XP001468479, ISSN: 0009-2258
- YAMAGUCHI TARO ET AL: "Decomposition of phosphate ore", CHEMICAL ABSTRACTS, CHEMICAL ABSTRACTS SERVICE (C A S), US, 30 juin 1976 (1976-06-30), XP001468478, ISSN: 0009-2258
- ISHIBASHI HIROAKI: "Production of high-purity calcium hydrogen phosphate and ammonium chloride", CHEMICAL ABSTRACTS, CHEMICAL ABSTRACTS SERVICE (C A S), US, 28 février 1980 (1980-02-28), XP001468466, ISSN: 0009-2258

## Description

### Domaine technique

La présente invention concerne un procédé pour la préparation d'un sel de phosphate présentant une haute pureté, c'est-à-dire une faible teneur en impuretés principalement en impuretés radioactives et/ou issues des métaux lourds ou métaux de transition du tableau périodique des éléments. La présente invention concerne également un procédé pour la production d' une formulation ou une composition destinée à l'agriculture ou dans l'alimentaire ou pour la préparation de celle-ci. De préférence, ledit sel de phosphate peut être utilisé pour la préparation de superphosphate simple (SSP), de superphosphate triple (TSP), de phosphate de monoammonium (MAP), de phosphate de diammonium (DAP), d'acide phosphorique, d'engrais NPK, de phosphate monocalcique (MCP) ou de phosphate mono-dicalcique (MDCP).

### Arrière plan technologique de l'invention

Les sels de phosphates sont régulièrement utilisés dans des compositions fertilisantes telles que des engrais ou des compositions alimentaires pour faciliter l'apport en phosphore respectivement dans les sols ou dans l'alimentation animale ou humaine.

Dans le domaine de l'agriculture, les engrais sont néanmoins des composés qui peuvent causer des sérieuses contaminations environnementales notamment des sols cultivés. Les engrais minéraux, compte tenu de leur utilisation intensive pour augmenter l'apport en nutriments tels que l'azote ou le phosphore peuvent contaminer durablement les sols si ceux-ci contiennent de manière excessive des impuretés. Les phosphates sont une source privilégiée pour apporter du phosphore au sol. Ceux-ci sont généralement produits ou issus du minerai de phosphate qui contient naturellement des teneurs élevées en métaux parmi lesquels le cadmium, le plomb, le mercure, l'uranium, le chrome ou encore l'arsenic. La dispersion de ces éléments toxiques dans les sols cultivés favorisera une pollution environnementale durable desdits sols cultivés. En outre, une partie de ces éléments pourront se retrouver dans les aliments cultivés sur ces sols, dans l'eau et in fine dans le corps humain ou animal. Plusieurs types de maladies gastro-intestinales, pulmonaires ou rénales sont connus pour être causées par la présence excessive d'éléments toxiques.

Parmi les sels de phosphate couramment utilisés dans l'agriculture, on trouve le superphosphate simple (SSP), le superphosphate triple (TSP), ou des sels de phosphate de calcium tels que le phosphate dicalcique (DCP). Le phosphate dicalcique est préparé à partir du minerai de phosphate. On connaît par exemple de WO2004/002888 la préparation de sels de phosphate par un procédé comprenant les étapes suivantes :
- au moins une attaque de minerai de phosphate par une première solution aqueuse d'acide chlorhydrique, avec formation d'une liqueur d'attaque,
- une première séparation, dans la liqueur d'attaque, entre une phase solide insoluble contenant des impuretés et une phase aqueuse séparée comportant en solution des ions phosphate, des ions chlorure et des ions calcium,
- une extraction d'une solution aqueuse contenant des ions phosphate, des ions chlorure et des ions calcium par un agent d'extraction organique, pour former une phase aqueuse d'extraction comportant des ions chlore et des ions calcium et une phase organique d'extraction contenant de l'acide phosphorique, et
- une réextraction de la phase organique d'extraction par un agent de réextraction aqueux, pour isoler une phase aqueuse de réextraction contenant des ions phosphate, ainsi que, éventuellement, une concentration de la phase aqueuse de réextraction pour former une solution aqueuse d'acide phosphorique pur.

Par ce procédé réalisé à température ambiante, un phosphate dicalcique ayant une teneur en P₂O₅ de 36,27% en poids et une teneur en Ca de 28,9% en poids est obtenu. La teneur en impuretés, principalement en métaux lourds parmi lesquels le cadmium, l'arsenic, le nickel ou le plomb sont respectivement de 0,65 ppm, 2,01 ppm, 3,5 ppm et 3,7 ppm. La mise en oeuvre de ce sel dans le domaine des engrais ou de l'alimentation du bétail est envisagée.

On connaît également par WO2005/066070 un autre procédé d'attaque du minerai de phosphate à température ambiante pour former un précipité de phosphate dicalcique. Le procédé comprend notamment les étapes de :
- une digestion de minerai de phosphate par une solution aqueuse d'acide chlorhydrique, avec formation d'une liqueur d'attaque constituée d'une phase aqueuse, dans laquelle du phosphate de calcium est en solution, et d'une phase solide insoluble, contenant des impuretés,
- une première séparation entre la phase solide insoluble et la phase aqueuse de la liqueur d'attaque,
- une neutralisation préalable d'un milieu aqueux contenant du phosphate de calcium en solution à un premier pH inférieur au pH auquel une part significative de ce phosphate de calcium en solution précipite sous forme de monohydrogénophosphate de calcium (DCP), avec précipitation d'impuretés,
- un isolement des impuretés précipitées à partir du milieu aqueux préalablement neutralisé,
- une neutralisation ultérieure dudit milieu aqueux préalablement neutralisé à un second pH supérieur au premier pH susdit, avec précipitation de DCP, et
- une deuxième séparation entre le milieu aqueux ultérieurement neutralisé, qui est une solution aqueuse de chlorure de calcium, et du DCP précipité.

La demanderesse a notamment observé que le DCP précipité obtenu par ce procédé contenait une teneur en cadmium de 0,46 ppm.

On connaît également par FR2115244 un procédé de préparation de DCP précipité produit à partir d'une attaque du minerai de phosphate par l'acide chlorhydrique dilué. Les matières insolubles issues de cette réaction sont séparées tandis que la phase liquide est soumise à deux étapes de neutralisation en présence d'un composé basique permettant la précipitation du DCP. La demanderesse a observé que les teneurs en métaux lourds dans le DCP issu de ce procédé étaient plus élevées que dans le DCP issu du procédé de WO2005/066070 décrit ci-dessus. La teneur en cadmium était notamment de 1,3 ppm.

On connaît également par Casacuberta et al., journal of hazardous materials, 2009, 170, 814-823, les teneurs en éléments radioactifs dans plusieurs échantillons de phosphate dicalcique (DCP). Les échantillons de DCP 1-4, 9 et 10 mentionnés dans ce document ont été préparés par digestion du minerai de phosphate en présence d'acide chlorhydrique puis neutralisation de la phase aqueuse résultant pour précipiter le DCP. Les teneurs en U²³⁴, U²³⁸ et Pb²¹⁰ sont élevées, respectivement de l'ordre de 900 Bq/kg, 1100 Bq/kg et 2000 Bq/kg, soit presque 4000 Bq/kg sur ces trois éléments radioactifs uniquement. Casacuberta et al. expliquent que ces teneurs élevées en uranium et plomb sont dues à la solubilité de ces éléments en milieu acide et leur précipitation sous forme de sels concomitamment à la précipitation du phosphate dicalcique lors du processus de préparation de ce dernier. La teneur en cadmium dans ces échantillons varie entre 0,44 ppm et 6,5 ppm.

On connaît également par Taro et al. (Japan Kokai 74/148,685 and 74/148,686) la décomposition en milieu acide du minerai de phosphate par une solution d'acide chlorhydrique pour préparer du phosphate tricalcique. Hiroaki et al. ont également décrit la production d'hydrogénophosphate de calcium à partir de roche de phosphate (Japan Kokai 78/101959). Le traitement de la roche par une solution d'acide chlorhydrique est effectué à 70°C pendant 3 heures. Raman Gopaliyengar et al. ont également décrit le traitement de la roche de phosphate par une solution concentrée d'acide chlorhydrique suivi d'une neutralisation par un sel d'ammonium (Indian 116,950).

Dans certaines conditions, la teneur en magnésium doit également être contrôlée. Le magnésium présent dans le phosphate dicalcique (DCP) provient de la source de phosphate utilisé pour produire le DCP. Une teneur en magnésium dans la source de phosphate trop élevée, supérieure à 1% en poids de magnésium dans la source de phosphate, entraîne des problèmes de traitement de la liqueur d'attaque lors de la lixiviation de la source de phosphate par un acide. Les sels de phosphate sont donc généralement préparés à partir d'une source de phosphate pauvre en magnésium (inférieure à 1% en poids dans la source de phosphate).

Les teneurs en éléments radioactifs ou en métaux des sels de phosphate telles que le phosphate dicalcique peuvent être diminuées pour limiter les risques liés à la contamination des sols ou des aliments cultivés dans ces sols tout en utilisant une large variété de source de phosphate.

La présente invention a pour but de fournir un procédé de préparation d'un sel de phosphate apte à être utilisée dans une formulation ou une composition destinée à l'agriculture ou à l'alimentaire ou apte à être utilisée pour la préparation d'une formulation, d'une composition destinée à l'agriculture ou à l'alimentaire, et dans laquelle au moins une partie des teneurs en éléments radioactifs ou impuretés métalliques en métaux lourds ou métaux de transition, est diminuée. La présente invention a également pour but de fournir un procédé de préparation de ce sel de phosphate flexible, c'est-à-dire pouvant utiliser une large gamme de source de phosphate indépendamment de la qualité de celle-ci.

### Résumé de l'invention

La présente invention concerne un procédé de préparation d'un sel de phosphate sous forme solide de formule Mₙ(HPO₄)y.zH₂O dans laquelle M est Na, K, NH₄, n = 2, et y = 1 ; ou M est Ca, n = 1, y = 1; ou M est Al ou Fe, n =2, y = 3 ; et dans laquelle z est 0, 1 ou 2; ledit sel de phosphate a une teneur en phosphate exprimée en teneur de P₂O₅ comprise entre 30 et 50% en poids du sel de phosphate.

Ledit sel de phosphate obtenu selon le procédé de la présente invention a une teneur en cadmium inférieur à 0,4 ppm. Ledit sel de phosphate obtenu selon le procédé de la présente invention a une teneur en magnésium inférieure ou égale à 20 ppm, avantageusement inférieure à 15 ppm, de préférence inférieure à 10 ppm.

Ledit sel de phosphate peut en outre avoir une teneur en Po²¹⁰ inférieure à 500 Bq/kg, avantageusement inférieure à 300 Bq/kg, de préférence inférieure à 200 Bq/kg.

Ledit sel de phosphate peut avoir une teneur en Ra²²⁶ inférieure à 50 Bq/kg, avantageusement inférieure à 25 Bq/kg, de préférence inférieure à 10 Bq/kg, en particulier inférieure à 5 Bq/kg.

De préférence, ledit sel de phosphate peut avoir une teneur en uranium inférieure à 1500 Bq/kg, de préférence inférieure à 1000 Bq/kg, en particulier inférieure à 800 Bq/kg. La teneur en uranium est déterminée par la somme des teneurs respectives en U²³⁴, U²³⁵ et U²³⁸.

Ledit sel de phosphate peut avoir une teneur en Pb²¹⁰ inférieure à 1500 Bq/kg, avantageusement inférieure à 1000 Bq/kg, de préférence inférieure à 800 Bq/kg, en particulier inférieure à 500 Bq/kg.

Les teneurs en uranium (U²³⁴, U²³⁵ et U²³⁸), en Pb²¹⁰, en Po²¹⁰, en Ra²²⁶ ou en magnésium ou en cadmium dans ledit sel de phosphate sont nettement diminuées par rapport à des sels de phosphate équivalents de l'art antérieur. Ainsi, comme mentionné ci-dessus, Casacuberta et al. ont décrit une série d'échantillons de DCP, obtenues par un procédé par voie humide, dont les teneurs en uranium (U²³⁴ et U²³⁸), en Po²¹⁰, en Pb²¹⁰ et en magnésium étaient respectivement de l'ordre de 2000 Bq/kg, 1000 Bq/kg, 2000 Bq/kg et 200 ppm. Ledit sel de phosphate présente des teneurs faibles en élément radioactifs pour être utilisé dans l'agriculture ou l'alimentation animale ou humaine. Ledit sel de phosphate peut présenter une ou plusieurs des teneurs en éléments radioactifs mentionnées dans la présente invention en combinaison avec une ou plusieurs des teneurs en métaux mentionnées dans la présente invention. Outre une faible teneur en cadmium, ledit sel de phosphate peut présenter une ou plusieurs des teneurs en Po²¹⁰, Pb²¹⁰, U²³⁴, U²³⁵, U²³⁸, Ra²²⁶, Ra²²⁸, K⁴⁰, Th²²⁸, Th²³⁰ ou Th²³² mentionnées dans la présente demande. La teneur exprimée en relation avec un élément radioactif, i.e. un radionucléide, correspond à l'activité en Bq du radionucléide par kg du produit considéré, par exemple par kg de sel de phosphate selon l'invention. Le procédé est un procédé par voie humide et non thermique (i.e. par calcination du minerai de phosphate). Le procédé selon la présente invention comprend les étapes de :
a) une digestion d'une source de phosphate par une première solution aqueuse d'acide chlorhydrique avec formation d'une liqueur d'attaque constituée d'une phase aqueuse comprenant des ions phosphates et des ions chlorures en solution, et d'une première phase solide insoluble contenant des impuretés,
b) une première séparation entre la phase aqueuse comprenant des ions phosphates et des ions chlorures en solution et la première phase solide insoluble contenant des impuretés,
c) une neutralisation de ladite phase aqueuse comprenant des ions phosphates et des ions chlorures en solution à un pH suffisant pour former un milieu aqueux comprenant des ions chlorures et pour précipiter les ions phosphates sous forme dudit sel de phosphate,
d) une deuxième séparation entre ledit milieu aqueux comprenant les ions chlorures et ledit sel de phosphate,
caractérisé en ce que les étapes a) et b) sont effectuées à une température comprise entre 50°C et 70°C pour une durée inférieure à deux heures et en ce que ladite première solution aqueuse d'acide chlorhydrique présente une concentration en HCl entre 12 à 15% en poids et en ce que la neutralisation effectuée à l'étape c) a une durée inférieure à une heure.

Ledit sel de phosphate présente des teneurs en éléments radioactifs, tels que l'uranium, le polonium ou Pb²¹⁰, et en métaux, tels que le magnésium ou le cadmium, réduites par rapport à l'art antérieur grâce à la mise en oeuvre des étapes a) et b) du présent procédé à une température comprise en 50 °C et 70 °C.

L'étape a) de digestion de la source de phosphate peut avoir une durée inférieure à une heure, avantageusement inférieure à 30 minutes, de préférence entre 5 minutes et 20 minutes, en particulier 15 minutes. La teneur en éléments radioactifs ou métalliques peut être également contrôlée par cette durée relativement courte de digestion de la source de phosphate. En contrôlant la température et/ou le temps de la digestion de la source de phosphate, la quantité d'impuretés (éléments radioactifs ou métaux) dissoutes à l'étape a) est plus faible tout en maintenant une réaction rapide et économiquement viable.

La durée de la neutralisation réalisée à l'étape c) peut être inférieure à une heure, en particulier entre 35 minutes et 50 minutes.

Compte tenu de sa pureté, i.e. grâce notamment à sa faible teneur en éléments radioactifs, ledit sel de phosphate obtenu selon le procédé de la présente invention peut être utilisé directement comme un des constituants d'une composition destinée à l'agriculture ou d'une composition alimentaire. Ledit sel de phosphate peut également être utilisé pour la préparation de phosphate de monoammonium ou de phosphate de diammonium. Ledit sel de phosphate peut également être utilisé pour la préparation de superphosphate triple ou de superphosphate simple. Ledit sel de phosphate peut également être utilisé pour préparer un acide phosphorique de grande pureté, ayant notamment une faible teneur en éléments radioactifs. Ledit sel de phosphate peut également être utilisé pour préparer du sulfate de calcium ou de chlorure de calcium ayant de préférence des teneurs en uranium, Po²¹⁰, Pb²¹⁰ et/ou en cadmium réduites. Ledit sel de phosphate peut également être utilisé pour préparer du phosphate monocalcique ou du phosphate mono-dicalcique (MDCP).

La présente description décrit également des compositions comprenant ledit sel de phosphate ou un des composés tels que mentionnés ci-dessus et préparés à partir dudit sel de phosphate selon la présente invention.

Le procédé selon la présente invention permet en outre d'utiliser une source de phosphate de faible qualité, c'est-à-dire ayant une teneur en phosphate, exprimée en pourcentage en poids de P₂O₅ dans la source de phosphate, faible ou contenant une teneur en impuretés élevées contrairement au procédé décrit dans l'art antérieur.

### Brève description des dessins

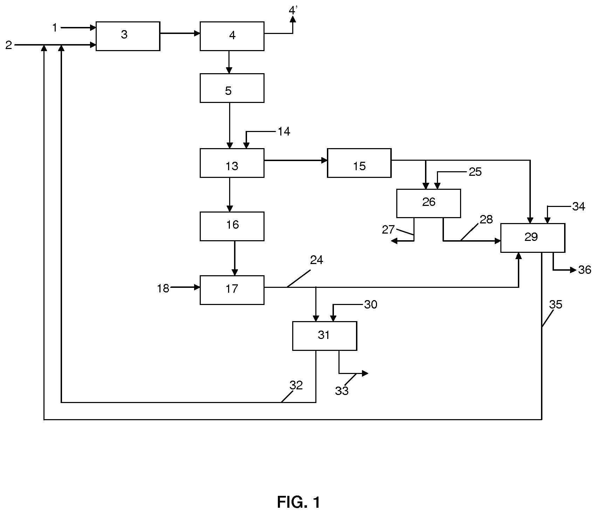

La figure 1 représente un diagramme bloc du procédé pour la préparation dudit sel de phosphate selon un mode de réalisation particulier de la présente invention.

### Description détaillée de la présente invention

Selon la présente invention, un sel de phosphate appauvri en impuretés métalliques ou radioactives est fourni par le procédé.

Ledit sel de phosphate a une teneur en phosphate exprimée en teneur de P₂O₅ comprise entre 30 et 50% en poids du sel de phosphate, de préférence de 36 à 45% en poids du sel de phosphate. Ledit sel de phosphate peut être sous forme solide. Ledit sel de phosphate peut être de formule Mₙ(HPO₄)y.zH₂O dans laquelle
M est Na, K, NH₄, n = 2, et y = 1 ; ou
M est Ca, n = 1, y = 1 ; ou
M est Al ou Fe, n =2, y = 3 ; et
dans laquelle z est 0, 1 ou 2.

Ledit sel de phosphate obtenu selon le procédé de la présente invention peut avoir une teneur en uranium inférieure à 1500 Bq/kg, de préférence inférieure à 1000 Bq/kg, en particulier inférieure à 800 Bq/kg. La teneur en uranium est déterminée par les teneurs respectives en U²³⁴, U²³⁵ et U²³⁸. Ledit sel de phosphate peut avoir une teneur en uranium U²³⁴ inférieure à 800 Bq/kg, avantageusement inférieure à 600 Bq/kg, de préférence inférieure à 500 Bq/kg, en particulier inférieure à 400 Bq/kg. Ledit sel de phosphate peut avoir une teneur en uranium U²³⁸ inférieure à 900 Bq/kg, avantageusement inférieure à 700 Bq/kg, de préférence inférieure à 500 Bq/kg, en particulier inférieure à 400 Bq/kg. Ledit sel de phosphate peut avoir une teneur en uranium U²³⁵ inférieure à 100 Bq/kg, avantageusement inférieure à 75 Bq/kg, de préférence inférieure à 50 Bq/kg, en particulier inférieure à 20 Bq/kg.

Ledit sel de phosphate peut avoir une teneur en Pb²¹⁰ inférieure à 1500 Bq/kg, avantageusement inférieure à 1000 Bq/kg, de préférence inférieure à 800 Bq/kg, en particulier inférieure à 500 Bq/kg.

Ledit sel de phosphate peut avoir une teneur en Po²¹⁰ inférieure à 500 Bq/kg, avantageusement inférieure à 300 Bq/kg, de préférence inférieure à 200 Bq/kg, en particulier inférieure à 150 Bq/kg.

Ledit sel de phosphate peut avoir une teneur en Th²²⁸ inférieure à 100 Bq/kg, avantageusement inférieure à 50 Bq/kg, de préférence inférieure à 25 Bq/kg, en particulier inférieure à 10 Bq/kg. Ledit sel de phosphate avoir une teneur en Th²³⁰ inférieure à 100 Bq/kg, avantageusement inférieure à 50 Bq/kg, de préférence inférieure à 25 Bq/kg, en particulier inférieure à 10 Bq/kg. Ledit sel de phosphate peut avoir une teneur en Th²³² inférieure à 50 Bq/kg, avantageusement inférieure à 25 Bq/kg, de préférence inférieure à 10 Bq/kg, en particulier inférieure à 1 Bq/kg. Ledit sel de phosphate peut avoir une teneur en thorium, déterminée par les teneurs respectives en Th²³⁰, Th²²⁸ et Th²³², inférieure à 150 Bq/kg, avantageusement inférieure à 100 Bq/kg, de préférence inférieure à 50 Bq/kg, en particulier inférieure à 20 Bq/kg.

Ledit sel de phosphate peut avoir une teneur en Ra²²⁶ inférieure à 50 Bq/kg, avantageusement inférieure à 25 Bq/kg, de préférence inférieure à 10 Bq/kg, en particulier inférieure à 5 Bq/kg. Ledit sel de phosphate peut avoir une teneur en Ra²²⁸ inférieure à 50 Bq/kg, avantageusement inférieure à 25 Bq/kg, de préférence inférieure à 10 Bq/kg, en particulier inférieure à 5 Bq/kg et plus particulièrement inférieure à 1Bq/kg. Ledit sel de phosphate peut avoir une teneur en radium, déterminée par les teneurs respectives en Ra²²⁶ et Ra²²⁸, inférieure à 100 Bq/kg, avantageusement inférieure à 50 Bq/kg, de préférence inférieure à 20 Bq/kg, en particulier inférieure à 10 Bq/kg et plus particulièrement inférieure à 5 Bq/kg.

Ledit sel de phosphate peut avoir une teneur en K⁴⁰ inférieure à 25 Bq/kg, avantageusement inférieure à 10 Bq/kg, de préférence inférieure à 5 Bq/kg.

Avantageusement, ledit sel de phosphate est un sel de phosphate calcium de formule Ca(HPO₄).zH₂O dans laquelle z est 0, 1 ou 2 ; en particulier un sel de phosphate calcium de formule Ca(HPO₄).2H₂O. Ledit sel de phosphate de calcium peut ainsi avoir une teneur en phosphate exprimée en teneur de P₂O₅ comprise entre 30 et 50% en poids du sel de phosphate et une teneur en calcium comprise entre 15 et 30% en poids du sel de phosphate. Avantageusement, ledit sel de phosphate de calcium peut avoir une teneur en phosphate exprimée en teneur de P₂O₅ comprise entre 33 à 45 % en poids du sel de phosphate et une teneur en calcium comprise entre 15 et 30% en poids du sel de phosphate. De préférence, ledit sel de phosphate de calcium peut avoir une teneur en phosphate exprimée en teneur de P₂O₅ comprise entre 36 à 45 % en poids du sel de phosphate et une teneur en calcium comprise entre 15 et 30% en poids du sel de phosphate.

Outre des teneurs faibles en impuretés radioactives, lesdites impuretés radioactives incluant un ou plusieurs des éléments radioactifs détaillés ci-dessus, e.g. U²³⁴, U²³⁵, U²³⁸, Po²¹⁰, Th²²⁸, Th²³⁰, Th²³², K⁴⁰, Ra²²⁶, Ra²²⁸ ou Pb²¹⁰, ledit sel de phosphate selon la présente invention peut avoir de faibles teneurs en impuretés métalliques, e.g. métaux lourds et métaux de transition. Alternativement ou concomitamment aux teneurs en un ou plusieurs éléments radioactifs décrits dans la présente demande, ledit sel de phosphate peut présenter une ou plusieurs des teneurs en métaux mentionnées ci-dessous.

En particulier, ledit sel de phosphate peut avoir une teneur en strontium inférieure à 300 ppm, avantageusement inférieure à 280 ppm, de préférence inférieure à 250 ppm, en particulier inférieure à 100 ppm.

Ledit sel de phosphate peut avoir une teneur en baryum inférieure à 50 ppm, avantageusement inférieure à 25 ppm, de préférence inférieure à 10 ppm.

Ledit sel de phosphate peut avoir une teneur en cobalt inférieure à 10 ppm, avantageusement inférieure à 5 ppm, de préférence inférieure à 1 ppm.

Ledit sel de phosphate peut avoir une teneur en mercure inférieure à 10 ppm, avantageusement inférieure à 5 ppm, de préférence inférieure à 1 ppm.

Ledit sel de phosphate peut avoir une teneur en arsenic inférieure à 5 ppm, avantageusement inférieure à 3 ppm, de préférence inférieure à 1,6 ppm, en particulier inférieure à 1 ppm.

Ledit sel de phosphate peut avoir une teneur en cuivre inférieure à 10 ppm, avantageusement inférieure à 5 ppm, de préférence inférieure à 1 ppm.

Ledit sel de phosphate peut avoir une teneur en zinc inférieure à 100 ppm, avantageusement inférieure à 50 ppm, de préférence inférieure à 35 ppm.

Ledit sel de phosphate peut avoir une teneur en chrome inférieure à 150 ppm, avantageusement inférieure à 100 ppm, de préférence inférieure à 75 ppm.

Ledit sel de phosphate peut avoir une teneur en nickel inférieure à 3 ppm, de préférence 2,5 ppm.

Ledit sel de phosphate peut avoir une teneur en thallium inférieure à 5 ppm, avantageusement inférieure à 2,5 ppm, de préférence inférieure à 1 ppm.

Ledit sel de phosphate peut avoir une teneur en plomb inférieure à 3 ppm, avantageusement inférieure à 2 ppm, de préférence inférieure à 1,5 ppm.

Ledit sel de phosphate peut avoir une teneur en cadmium inférieure à 0,40 ppm, avantageusement inférieure à 0,30 ppm, de préférence inférieure à 0,20 ppm, en particulier inférieure à 0,10 ppm.

Ledit sel de phosphate peut avoir une teneur en manganèse inférieure à 20 ppm, avantageusement inférieure à 15 ppm, de préférence inférieure à 10 ppm, en particulier inférieure à 5 ppm, plus particulièrement inférieure à 2,8 ppm.

Ledit sel de phosphate peut avoir une teneur en molybdène inférieure à 3 ppm, avantageusement inférieure à 2 ppm, de préférence inférieure à 1 ppm.

Ledit sel de phosphate selon la présente invention peut également avoir une teneur en magnésium inférieure ou égale à 20 ppm, avantageusement inférieure à 15 ppm, de préférence inférieure à 10 ppm. Ledit sel de phosphate peut contenir moins de 5% en poids du magnésium compris initialement dans ladite source de phosphate, avantageusement moins de 3%, de préférence moins de 2,5 %, en particulier moins de 1 %.

Ledit sel de phosphate peut avoir éventuellement une teneur en impuretés métalliques inférieure à 1000 ppm, de préférence inférieure à 750 ppm, en particulier inférieure à 500 ppm, ladite teneur en impuretés métalliques étant déterminée à partir des teneurs respectives en baryum, cobalt, mercure, manganèse, magnésium, molybdène, strontium, thallium, cadmium, arsenic, cuivre, plomb, zinc, nickel et chrome dans ledit sel de phosphate.

Ledit sel de phosphate peut être sous la forme d'agrégats de particules solides ayant un diamètre compris entre 500 µm et 5 mm, avantageusement entre 500 µm et 3 mm, de préférence entre 1 mm et 2 mm.

Alternativement, ledit sel de phosphate peut être sous la forme d'agrégats de particules solides ayant un diamètre inférieur à 500 µm, avantageusement un diamètre compris entre 50 et 500 µm, de préférence entre 100 µm et 200 µm.

De préférence, ledit sel de phosphate peut être produit à partir d'une source de phosphate sélectionné parmi le groupe consistant en le minerai de phosphate ou des sources de phosphate secondaires telles que des cendres, par exemple les cendres volantes (cendres d'os ou de lisier, ou des cendres issues de l'incinération de boues d'épuration) ou toute autre matière première contenant plus de 10% de phosphate exprimée en teneur de P₂O₅ (i.e. toute autre matière première contenant 10% en poids de P₂O₅). Le minerai de phosphate et les sources de phosphate secondaires comprennent typiquement plus de 10 % en poids de P₂O₅, avantageusement plus de 15% en poids de P₂O₅, de préférence plus de 20% en poids de P₂O₅.

Ledit sel de phosphate peut avoir une solubilité dans l'eau à température ambiante (20°C) comprise entre 0,01 et 2% en poids. Lorsque ledit sel de phosphate est un sel de phosphate de calcium, celui-ci peut avoir une solubilité dans l'eau à température ambiante (20 °C) comprise entre 0,01 et 0,1 % en poids.

Ledit sel de phosphate de préférence lorsqu'il est sous la forme d'un sel de phosphate de calcium, peut être utilisé comme ingrédient dans une composition destinée à l'agriculture, dans une composition alimentaire, ou comme produit de départ pour la préparation d'acide phosphorique, de superphosphate simple ou superphosphate triple, de phosphate monocalcique (MCP), de phosphate mono-dicalcique (MDCP), de sels de phosphate d'ammonium (monoammonium ou diammonium), de sels de phosphate de potassium, ou de composés fertilisants de type NPK.

Ledit sel de phosphate de préférence lorsqu'il est sous la forme d'un sel de phosphate de calcium, peut être mis en contact avec un ou plusieurs des composés choisis parmi l'eau, l'acide sulfurique, l'acide phosphorique, une source d'azote ou une source de potassium, ou leurs mélanges, et mélanger à ceux-ci pour former avantageusement des agrégats de particules solides aptes à être utilisé comme ingrédient dans des compositions destinées à l'agriculture ou des compositions alimentaires. Ladite source d'azote peut être de l'ammoniaque, de l'urée, un nitrate, un sel d'ammonium tel que le sulfate d'ammonium, le chlorure d'ammonium, le nitrate d'ammonium ou leurs mélanges, ou tout autre source d'azote organique ou minérale comprenant un atome d'azote. Ladite source de potassium peut être un sel de potassium tel que le chlorure de potassium, le sulfate de potassium, le nitrate de potassium, un mélange de sulfate de potassium et de sulfate de magnésium, ou leurs mélanges. Les agrégats de particules solides peuvent comprendre dudit sel de phosphate selon la présente invention si la réaction avec l'un quelconque des réactifs ci-dessus n'est pas totale. Lorsque ledit sel de phosphate est mis en contact avec de l'acide sulfurique, et optionnellement de l'eau, du superphosphate simple (SSP) peut être formé. Lorsque ledit sel de phosphate est mis en contact avec de l'acide phosphorique, et optionnellement de l'eau et de l'acide sulfurique, du superphosphate triple (TSP) peut être formé. Le rapport en poids entre l'acide phosphorique et le sel de phosphate est compris entre 0,5 et 0,65. La teneur en phosphate dans le TSP est généralement comprise entre 40% et 55% en poids de P₂O₅. Lorsque ledit sel de phosphate est mis en contact avec de l'acide sulfurique, ladite source d'azote, et optionnellement de l'eau et/ou de l'acide phosphorique, du phosphate de monoammonium (MAP), du phosphate de diammonium (DAP) ou un mélange des deux peut être formé. Lorsque ledit sel de phosphate est mis en contact avec de l'acide sulfurique et une source de potassium et optionnellement de l'eau et/ou de l'acide phosphorique, sel de phosphate de potassium peut être formé. Lorsque ledit sel de phosphate est mis en contact avec ladite source d'azote et ladite source de potassium, et optionnellement de l'eau et/ou de l'acide phosphorique et/ou de l'acide sulfurique, une composition de type « NPK » peut être formé. Le terme « NPK » désigne une composition comprenant de l'azote, du potassium, du phosphore ou leurs mélanges. De préférence, la composition NPK peut comprendre une teneur en poids différente ou égale en phosphore, en azote ou en potassium sur base du poids totale de la composition. La teneur en phosphore, en azote ou en potassium peut être ajustée en fonction des composés mis en contact et leurs proportions respectives. Lorsque ledit sel de phosphate est mis en contact avec une quantité adéquate d'acide phosphorique, du phosphate monocalcique peut être formé. Le rapport en poids entre l'acide phosphorique et le sel de phosphate est compris entre 0,5 et 0,65. Lorsque ledit sel de phosphate est mis en contact avec une quantité adéquate d'acide phosphorique, un phosphate mono-dicalcique peut être formé. Le rapport en poids entre l'acide phosphorique et le sel de phosphate est inférieur à 0,5. L'acide phosphorique utilisé dans les différents procédés ci-dessus a de préférence une teneur en phosphate exprimée en pourcentage en poids de P₂O₅ compris entre 45% et 60%, avantageusement entre 50% et 55%, de préférence environ 54%.

Ledit sel de phosphate est préparé par le procédé selon la présente invention comprenant les étapes suivantes :
a) une digestion d'une source de phosphate par une première solution aqueuse d'acide chlorhydrique avec formation d'une liqueur d'attaque constituée d'une phase aqueuse comprenant des ions phosphates et des ions chlorures en solution, et d'une première phase solide insoluble contenant des impuretés,
b) une première séparation entre la phase aqueuse comprenant des ions phosphates et des ions chlorures en solution et la première phase solide insoluble contenant des impuretés,
c) une neutralisation de ladite phase aqueuse comprenant des ions phosphates et des ions chlorures en solution à un pH suffisant pour former un milieu aqueux comprenant des ions chlorures et pour précipiter les ions phosphates sous forme dudit sel de phosphate,
d) une deuxième séparation entre ledit milieu aqueux comprenant les ions chlorures et ledit sel de phosphate,
caractérisé en ce que les étapes a) et b) sont effectuées à une température comprise entre 50°C et 70°C pour une durée inférieure à deux heures et en ce que ladite première solution aqueuse d'acide chlorhydrique présente une concentration de HCl entre 12 et 15% en poids et en ce que la neutralisation effectuée à l'étape c) a une durée inférieure à une heure.

Ledit procédé selon la présente invention peut également comprendre une étape de séchage dudit sel de phosphate obtenu à l'étape d).

L'étape a) de digestion de la source de phosphate peut avoir une durée inférieure à deux heures, avantageusement inférieure à une heure, de préférence inférieure à 30 minutes, en particulier entre 5 minutes et 20 minutes, et plus particulièrement de 15 minutes. La diminution de la durée de l'étape de digestion permet de diminuer la teneur en métaux dans le sel de phosphate obtenu à l'étape b), tel que par exemple la teneur en manganèse.

La durée de la neutralisation réalisée à l'étape c) est inférieure à une heure, en particulier entre 35 minutes et 50 minutes.

Les impuretés contenues dans la phase solide obtenue à l'étape a) et séparée à l'étape b) peuvent être des impuretés métalliques ou des éléments radioactifs ou des matières insolubles. Les éléments radioactifs contenus dans cette phase solide peuvent être un ou plusieurs des éléments suivants U²³⁴, U²³⁵, U²³⁸, Po²¹⁰, Th²²⁸, Th²³⁰, Th²³², K⁴⁰, Ra²²⁶, Ra²²⁸ ou Pb²¹⁰. Les éléments métalliques peuvent être l'un quelconque des éléments métalliques suivants baryum, cobalt, mercure, manganèse, magnésium, molybdène, strontium, thallium, cadmium, arsenic, cuivre, plomb, zinc, nickel et chrome. La mise en oeuvre des étapes a) et b) à une température entre 50°C et 70 °C, avantageusement entre 55 °C et 65 °C, permet de contrôler la précipitation des impuretés radioactives ou non. De plus, même en présence d'une source de phosphate riche en magnésium, la mise en oeuvre du procédé à une température entre 50 °C et 70°C permet de contrôler la viscosité de la liqueur d'attaque et éviter les problèmes de processing de la réaction de lixiviation de la roche. Lorsque les étapes a) et c) sont réalisées pendant un temps de réaction court tel que mentionné ci-dessus, la pureté dudit milieu aqueux comprenant les ions chlorures et dudit sel de phosphate obtenus à l'étape d) est accentuée. Ainsi, la présence en impuretés radioactives et/ou en métaux est fortement limitée dans ledit milieu aqueux comprenant les ions chlorures et ledit sel de phosphate obtenus à l'étape d) grâce au procédé selon la présente invention.

Ladite source de phosphate utilisée à l'étape a) peut être sélectionnée parmi le groupe consistant en le minerai de phosphate ou des sources de phosphate secondaires telles que des cendres, par exemple les cendres volantes (les cendres d'os ou de lisier ou les cendres issues de l'incinération de boues d'épuration) ou toute autre matière première contenant plus de 10% de phosphate exprimée en pourcentage en poids de P₂O₅ dans ladite matière première. Les cendres telles qu'utilisées ici peuvent comprendre plus de 10% en poids de phosphate exprimée en pourcentage en poids de P₂O₅ dans les cendres, avantageusement plus de 15% en poids de P₂O₅.

Ladite source de phosphate peut contenir une teneur en magnésium supérieure à 1,5% en poids sur base du poids total de la source de phosphate. Avantageusement, la teneur en magnésium de ladite source de phosphate peut être comprise entre 1,5% et 20% en poids sur base du poids total de la source de phosphate, de préférence entre 1,5 et 10% en poids.

Ladite première solution aqueuse d'acide chlorhydrique utilisée à l'étape a) du présent procédé peut avoir une concentration de HCl inférieure ou égale à 15% en poids, plus particulièrement entre 12 et 15% en poids de la première solution aqueuse. L'utilisation d'une solution d'HCl inférieure ou égale à 15% permet d'obtenir une liqueur d'attaque filtrable. En effet, l'utilisation d'une solution ayant une concentration supérieure à 20 % ne permet pas de filtrer la liqueur d'attaque, au-delà d'une concentration en HCl supérieure ou égale à 25%, la liqueur d'attaque n'est plus agitable. L'utilisation d'une solution de HCl à une concentration de l'ordre de 12% en poids permet la mise en oeuvre de l'étape a) dans un milieu dilué favorisant le traitement de roche riche en magnésium.

De préférence, dans la liqueur d'attaque, le rapport molaire entre HCl et Ca est compris entre 1,2 et 2,6, avantageusement entre 1,6 et 2,4, de préférence entre 1,6 et 2,2, en particulier entre 1,6 et 2,0.

Ladite neutralisation de l'étape c) peut être réalisée en présence d'une base, avantageusement du carbonate de calcium, d'hydroxyde de calcium, de l'oxyde de calcium ou d'un ou plusieurs sels de calcium, de sodium, de potassium ou d'ammonium. De préférence, ladite neutralisation de l'étape c) est réalisée en présence de carbonate de calcium, d'hydroxyde de calcium, de l'oxyde de calcium ou d'un sel de calcium. Dans ce cas, ledit sel de phosphate précipité est un sel de phosphate de calcium et ledit milieu aqueux, à l'étape d), comprend des ions chlorures et des ions calcium. Ledit milieu aqueux est de préférence une solution de chlorure de calcium présentant une teneur en chlorure de calcium comprise entre 8 et 20% en poids de la solution, avantageusement entre 12 et 18% en poids, de préférence d'environ 15% en poids.

Alternativement, l'utilisation à l'étape c) d'un sel de sodium, de potassium ou d'ammonium permet la préparation respectivement d'un sel de phosphate de sodium, de potassium ou d'ammonium. L'utilisation adéquate d'un sel ou d'un hydroxyde d'aluminium ou de fer permet la préparation du sel de phosphate correspondant.

Ladite neutralisation effectuée à l'étape c) peut être mise en oeuvre à un pH inférieur à 5, avantageusement compris entre 2,0 et 5,0, de préférence entre 2,5 et 4,0, en particulier entre 2,5 et 3,0. Lorsque la neutralisation est effectuée à un pH compris entre 2,5 et 3,0, le magnésium reste en solution sans précipiter concomitamment audit sel de phosphate. De préférence, cette étape de neutralisation peut être effectuée à température ambiante ou à une température comprise entre 50 et 70 °C.

Ledit sel de phosphate obtenu à l'étape d) peut contenir moins de 5% en poids du magnésium compris initialement dans ladite source de phosphate, avantageusement moins de 2,5%, de préférence moins de 1%.

Selon un mode de réalisation préféré, l'étape a) du présent procédé peut être réalisée dans un premier réacteur à co-courant comprenant un ou plusieurs compartiments, avantageusement entre 2 et 12 compartiments, de préférence entre 2 et 5 compartiments, en particulier entre 3 et 5 compartiments. Les compartiments sont disposés en série et communiquent entre eux par le bas de ceux-ci. La roche et l'acide chlorhydrique peuvent par exemple être introduits dans un premier compartiment. La liqueur d'attaque ainsi formée passe alors dans chacun des autres compartiments qui peuvent être ainsi utilisés pour moduler ou contrôler le temps de réaction, et optimiser le mélange des composés. Le dernier compartiment dudit premier réacteur à co-courant de l'étape a) est connecté à un filtre par l'intermédiaire d'un conduit permettant le convoyage du mélange réactionnel obtenu à la fin de l'étape a) vers le filtre où l'étape b) du présent procédé sera réalisée. Optionnellement, une cuve de stockage tampon peut être placée entre le dernier compartiment du premier réacteur à co-courant utilisé pour la mise en oeuvre de l'étape a) et le filtre utilisé pour la mise en oeuvre de l'étape b). Dans ce cas, le mélange réactionnel obtenu à la fin de l'étape a) est transféré de la cuve tampon vers le filtre de l'étape b). Le filtrat récupéré à l'étape b) est acheminé vers un second réacteur à co-courant comprenant un ou plusieurs compartiments, avantageusement entre 2 et 12 compartiments, de préférence entre 2 et 5 compartiments, en particulier entre 3 et 5 compartiments. La neutralisation de l'étape c) du présent procédé s'effectue dans ledit second réacteur à co-courant. Le filtrat est tout d'abord introduit dans le premier compartiment dudit second réacteur. Le flux du filtrat permet d'acheminer celui-ci vers les autres compartiments dudit second réacteur à co-courant. Lorsque la neutralisation est effectuée en présence d'une base, celle-ci peut être introduite dans chacun des compartiments dudit second réacteur lors du passage du filtrat dans chacun de ceux-ci. La réaction de neutralisation se poursuit dans chacun des compartiments compris dans ledit second réacteur pour favoriser la précipitation du sel de phosphate selon la présente invention. L'utilisation de ce réacteur compartimenté pour la mise en oeuvre de l'étape c) du présent procédé permet la formation de cristaux dudit sel de phosphate selon la présente invention ayant une forme et une granulométrie optimisées en vue de l'étape subséquente d). Ainsi lorsque ledit sel de phosphate est le DCP de formule CaHPO₄.2H₂O, les cristaux de DCP obtenus peuvent être sous la forme de cluster, c'est-à-dire d'agglomérats de forme sphérique ou elliptique. La plus grande dimension des agglomérats peut être inférieure à 500 µm, avantageusement compris entre 20 µm et 250 µm.

Selon un mode de réalisation particulier, le procédé selon la présente invention comprend en outre les étapes :
e) une attaque de tout ou partie dudit sel de phosphate obtenu à l'étape d) par une solution aqueuse d'acide fort pour former une suspension d'un premier acide phosphorique en solution et une seconde phase solide,
f) une troisième séparation entre le premier acide phosphorique et ladite seconde phase solide.

De préférence, l'étape e) peut être réalisée à une température supérieure à 80°C, en particulier à une température comprise entre 80°C et 100°C. La mise en oeuvre de l'étape e) à une température supérieure à 80°C, de préférence à une température comprise entre 80 °C et 100 °C, permet de contrôler la viscosité du milieu réactionnel obtenu à l'étape e). De préférence, lorsque ledit sel de phosphate utilisé à l'étape e) est un sel de phosphate de calcium, ladite solution aqueuse d'acide fort peut être l'acide sulfurique. Ainsi, la seconde phase solide de l'étape e) comprend du sulfate de calcium hémihydrate. Alternativement, lorsque ledit sel de phosphate utilisé à l'étape e) est un sel de phosphate de calcium et l'étape e) est réalisée à une température inférieure à 80 °C, de préférence entre 60°C et 80°C, ladite solution aqueuse d'acide fort peut être l'acide sulfurique et ladite seconde phase solide de l'étape e) comprend du sulfate de calcium dihydrate.

De préférence, à l'étape e) le rapport molaire entre la solution aqueuse d'acide fort et ledit sel de phosphate obtenu à l'étape d) peut être compris entre 0,6 et 1,6.

Le premier acide phosphorique obtenu à l'étape f) peut être traité avec du charbon actif ou un composé sulfure ou peut être concentré. Ledit premier acide phosphorique peut être utilisé dans une composition destinée à l'agriculture, par exemple une composition fertilisante, ou utilisé dans la préparation d'une composition alimentaire. Ledit premier acide phosphorique peut être utilisé pour la préparation d'un superphosphate triple ou d'acide superphosphorique. La teneur en éléments radioactifs ou en éléments métalliques dans les produits ainsi préparés sera réduite.

Selon un mode de réalisation préféré, ledit milieu aqueux comprenant des ions chlorures et obtenu à l'étape d) peut être traité par un composé basique pour former une phase aqueuse purifiée et une phase solide comprenant des impuretés. Ladite phase aqueuse purifiée comprend des ions chlorures et a de préférence un pH compris entre 8 et 12, avantageusement entre 9 et 10. Avantageusement, lorsque le milieu aqueux obtenu à l'étape d) comprend des ions chlorures et des ions calcium, le composé basique est choisi parmi l'hydroxyde de calcium, l'oxyde de calcium et les sels de calcium, de sodium, de potassium ou d'ammonium pour former une phase aqueuse purifiée comprenant du chlorure de calcium. Ladite phase solide comprenant des impuretés peut comprendre des sels de magnésium ou des éléments radioactifs ou des impuretés métalliques. Le traitement dudit milieu aqueux comprenant des ions chlorures et obtenu à l'étape d) par un composé basique permet donc d'obtenir une solution de chlorure de calcium purifiée, i.e. ayant une teneur en éléments radioactifs et en magnésium plus faibles. Ce traitement peut être réalisé à une température comprise entre 50 et 70 °C. Alternativement, ce traitement peut être réalisé à température ambiante. De préférence, ladite phase aqueuse purifiée présente une teneur en chlorure de calcium comprise entre 10 et 30% en poids de la phase aqueuse

La seconde phase solide de l'étape e) et séparée à l'étape f) comprend du sulfate de calcium hémihydrate ou du sulfate de calcium dihydrate ou un mélange des deux. Le sulfate de calcium hémihydrate, le sulfate de calcium dihydrate ou leur mélange peut être mélangé à une solution d'acide, de préférence un acide fort, pour former une phase solide comprenant du sulfate de calcium dihydrate et une phase aqueuse comprenant des ions phosphates. Le sulfate de calcium hémihydrate est ainsi transformé en sulfate de calcium dihydrate. La solution d'acide peut être une solution d'acide chlorhydrique, et ainsi la phase aqueuse obtenue est une solution d'acide chlorhydrique comprenant également des ions phosphates. Alternativement, la solution d'acide fort peut être une solution d'acide sulfurique et la seconde phase solide séparée à l'étape f) peut également être mélangée à ladite phase aqueuse purifiée, de préférence ladite solution de chlorure de calcium purifiée, ou audit milieu aqueux comprenant des ions chlorures obtenu à l'étape d), de préférence audit milieu aqueux comprenant des ions chlorures et des ions calcium obtenu à l'étape d), ou leur mélange. Une phase solide comprenant du sulfate de calcium dihydrate et une phase aqueuse comprenant de l'acide chlorhydrique sont alors obtenues. La phase aqueuse comprenant de l'acide chlorhydrique peut être recyclée pour former tout ou partie de ladite première solution aqueuse d'acide chlorhydrique utilisée à l'étape a).

Le sel de phosphate obtenu selon le procédé de la présente invention peut être utilisé, de préférence sous forme solide, dans une composition ou pour la préparation de celle-ci. La composition peut être une composition destinée à l'agriculture ou une composition alimentaire. Avantageusement, ladite composition destinée à l'agriculture est une composition fertilisante liquide, ou une composition fertilisante partiellement ou totalement soluble dans l'eau. Ladite composition alimentaire est une composition pour l'alimentation animale ou du bétail ou humaine.

Une composition destinée à l'agriculture ou une composition alimentaire comprenant ledit sel de phosphate selon la présente invention est décrite.

Ladite composition alimentaire peut également comprendre en outre une substance alimentaire de base. Ladite composition alimentaire peut être préparée par un procédé comprenant les étapes :
A) préparation dudit sel de phosphate selon la présente invention par le procédé selon la présente invention,
B) mélange dudit sel de phosphate ainsi préparé avec une substance alimentaire de base.

Ladite composition destinée à l'agriculture peut comprendre en outre une source de potassium et/ou une source d'azote, du phosphate de diammonium, du phosphate de monoammonium, du phosphate de potassium, du superphosphate simple, du phosphate monocalcique, du phosphate mono-dicalcique ou du superphosphate triple. Ladite composition destinée à l'agriculture peut être une composition fertilisante, de préférence une composition fertilisante liquide, ou une composition fertilisante partiellement ou totalement soluble dans l'eau. Ladite source d'azote peut être de l'ammoniaque, de l'urée, un nitrate, un sel d'ammonium tel que le sulfate d'ammonium, le chlorure d'ammonium, le nitrate d'ammonium ou leurs mélanges, ou tout autre source d'azote organique ou minérale comprenant un atome d'azote. Ladite source de potassium peut être un sel de potassium tel que le chlorure de potassium, le sulfate de potassium, le nitrate de potassium, l'hydrogénosulfate de potassium, un mélange de sulfate de potassium et de sulfate de magnésium, ou leurs mélanges. Ladite composition destinée à l'agriculture peut être préparée par un procédé comprenant les étapes :
A) préparation dudit sel de phosphate selon la présente invention, de préférence par le procédé selon la présente invention,
B) mélange dudit sel de phosphate obtenu en A) avec un ou plusieurs des composés suivants : une source d'azote ou une source de potassium ou leur mélange, de l'eau, de l'acide sulfurique ou de l'acide phosphorique pour former ladite composition.

Dans les différentes compositions décrites dans la présente demande, ledit sel de phosphate obtenu selon le procédé de la présente invention est de préférence un sel de phosphate de calcium (CaHPO₄.zH₂O où z est 0, 1 ou 2 ; de préférence z est 2).

Un procédé pour la préparation de superphosphate simple (SSP) est décrit et comprend les étapes de :
A) préparation dudit sel de phosphate par le procédé selon la présente invention,
B) addition d'acide sulfurique et optionnellement d'acide phosphorique, de l'eau audit sel de phosphate pour former du superphosphate simple (SSP).
Le rapport molaire entre l'acide sulfurique et ledit sel de phosphate est compris entre 0,1 et 1. Le rapport molaire entre l'acide phosphorique et ledit sel de phosphate est compris entre 0 et 1.

Un procédé pour la préparation de superphosphate triple (TSP) est décrit et comprend les étapes de :
A) préparation dudit sel de phosphate par le procédé selon la présente invention,
B) addition d'acide phosphorique, et optionnellement d'acide sulfurique et/ou de l'eau audit sel de phosphate pour former le TSP.
Le rapport molaire entre l'acide sulfurique et ledit sel de phosphate est compris entre 0 et 1, de préférence entre 0,1 et 0,5. Le rapport molaire entre l'acide phosphorique et ledit sel de phosphate est compris entre 0,1 et 1, de préférence entre 0,1 et 0,5.

Un procédé pour la préparation de phosphate de monoammonium (MAP) ou du phosphate de diammonium (DAP) est fourni et comprend les étapes de :
A) préparation d'un sel de phosphate par le procédé selon la présente invention,
B) addition d'acide sulfurique et d'ammoniaque ou d'un sel d'ammonium audit sel de phosphate pour former le phosphate de monoammonium ou le phosphate de diammonium.
De préférence, l'addition d'acide sulfurique peut être préalable à celle de l'ammoniaque ou du sel d'ammonium. De préférence, une filtration est effectuée après l'addition d'acide sulfurique pour séparer une phase aqueuse comprenant de l'acide phosphorique et une phase solide comprenant du sulfate de calcium. L'addition de l'ammoniaque ou du sel d'ammonium est effectuée sur le filtrat issu de ladite filtration, i.e. sur la phase aqueuse comprenant de l'acide phosphorique. Le rapport molaire entre l'acide sulfurique et ledit sel de phosphate est compris entre 0,5 et 1,5, de préférence entre 0,8 et 1,2. De préférence, le rapport molaire entre l'ammoniaque ou le sel d'ammonium et ledit sel de phosphate est compris entre 0,5 et 2,5.

Un procédé pour la préparation de phosphate de potassium est décrit et comprend les étapes de :
A) préparation d'un sel de phosphate par le procédé selon la présente invention,
B) addition d'une source de potassium audit sel de phosphate, et optionnellement d'un acide, pour former ledit sel de phosphate de potassium.
L'acide peut être l'acide phosphorique ou l'acide sulfurique. De préférence, lorsque l'acide sulfurique est ajouté, cette addition peut être préalable à celle de la source de potassium. Une filtration est avantageusement effectuée après l'addition d'acide sulfurique pour séparer une phase aqueuse comprenant de l'acide phosphorique et une phase solide comprenant du sulfate de calcium. L'addition de la source de potassium peut alors être effectuée sur le filtrat issu de ladite filtration, i.e. sur la phase aqueuse comprenant de l'acide phosphorique. Alternativement, une filtration peut être effectuée après la mise en oeuvre de l'étape b). Le rapport molaire entre l'acide sulfurique et ledit sel de phosphate est compris entre 0,5 et 1,5, de préférence entre 0,8 et 1,2. De préférence, le rapport molaire entre la source de potassium et ledit sel de phosphate est compris entre 0,5 et 2,5, de préférence entre 1 et 2. Le procédé s'applique tout particulièrement à la préparation de phosphate de monopotassium (MKP - KH₂PO₄). Dans ce cas-ci, la source de potassium peut être de préférence du chlorure de potassium, du sulfate de potassium, de l'hydrogénosulfate de potassium (KHSO₄) ou un autre sel de potassium. Le rapport molaire entre l'acide et ledit sel de phosphate est compris entre 0 et 1. Le rapport molaire entre la source de potassium et ledit sel de phosphate est compris entre 0,5 et 2,5, de préférence entre 1 et 2. L'apport d'acide est notamment optionnel lorsque la source de potassium est l'hydrogénosulfate de potassium.

Ledit sel de phosphate préparé selon le procédé de la présente invention, peut être utilisé dans une composition destinée à l'agriculture ou dans une composition alimentaire, ou servir de produit de départ pour la préparation desdites compositions. Celles-ci peuvent être préparées suivant les procédés décrits ci-dessus. La présente invention permet aussi la préparation de composition de type « NPK ». Ce type de compositions est fréquemment utilisé comme engrais dans l'agriculture. La présente description décrit donc des compositions présentant de faibles niveaux d'impuretés (éléments radioactifs ou en métaux) évitant les contaminations des sols et des cultures où ces compositions peuvent être utilisées.

Un procédé pour la préparation de composition NPK est décrit et comprend les étapes de :
A) préparation d'un sel de phosphate par le procédé selon la présente invention,
B) addition d'acide sulfurique, d'une source d'azote et/ou d'une source de potassium, audit sel de phosphate pour former une composition NPK.

Le rapport molaire entre l'acide sulfurique et ledit sel de phosphate est compris entre 0,1 et 1,5.

Un procédé pour la préparation de phosphate monocalcique (MCP) est décrit fourni et comprend les étapes de :
A) préparation d'un sel de phosphate par le procédé selon la présente invention,
B) addition d'une quantité adéquate d'acide phosphorique pour obtenir un phosphate monocalcique.
La quantité adéquate d'acide phosphorique est déterminée en fonction du poids en sel de phosphate. Le rapport en poids entre l'acide phosphorique et le sel de phosphate est compris entre 0,5 et 0,65.

Un procédé pour la préparation de phosphate mono-dicalcique (MDCP) est décrit et comprend les étapes de :
A) préparation d'un sel de phosphate par le procédé selon la présente invention,
B) addition d'une quantité adéquate d'acide phosphorique pour obtenir du phosphate mono-dicalcique.
La quantité adéquate d'acide phosphorique est déterminée en fonction du poids en sel de phosphate. Le rapport en poids entre l'acide phosphorique et le sel de phosphate est inférieur à 0,5.

Avantageusement, le procédé selon l'invention est réalisé en continu.

La figure 1 représente un diagramme bloc du procédé de préparation dudit sel de phosphate selon un mode de réalisation particulier de la présente invention. Le mode de réalisation particulier décrit ci-dessous concerne notamment la préparation de phosphate dicalcique ayant une faible teneur en éléments radioactifs, mais également la préparation de solutions de chlorure de calcium ou la préparation de sulfate de calcium ayant également une faible teneur en éléments radioactifs. Le procédé peut s'appliquer à la préparation d'autres types de sel de phosphate, par exemple des sels de phosphate de sodium, potassium, ammonium, aluminium ou fer.

La source de phosphate 1, par exemple le minerai de phosphate, est traitée avec une solution d'acide chlorhydrique 2 lors d'une étape de digestion de la source phosphate en 3. Le traitement est effectué à une température comprise entre 50 et 70°C pendant une durée inférieure une heure, avantageusement inférieure à 30 minutes, de préférence entre 5 minutes et 20 minutes. Le milieu réactionnel 4 issu de la digestion 3 comprend une phase solide comprenant des impuretés (éléments radioactifs et/ou impuretés métalliques) et une phase liquide comprenant des ions phosphate et des ions chlorures. Le milieu réactionnel 4 est filtré pour séparer la phase solide 4' comprenant les impuretés métalliques et/ou des éléments radioactifs, de la phase aqueuse 5 comprenant des ions phosphates et des ions chlorures.

La phase aqueuse 5 comprenant des ions phosphates et des ions chlorures est ensuite traitée, en 13, avec une base 14, par exemple CaCO₃, pour former un précipité de phosphate dicalcique 16 et une solution aqueuse 15 comprenant des ions chlorures et des ions calcium formant ainsi une solution de chlorure de calcium. Le précipité de phosphate dicalcique 16 et la solution aqueuse 15 sont séparés par filtration, par exemple à l'aide d'un filtre à bande. Le phosphate dicalcique 16 ainsi obtenu est un sel de phosphate selon la présente invention, i.e. appauvri en éléments radioactifs notamment. Ce phosphate dicalcique 16 peut être utilisé comme matière première dans une composition destinée à l'agriculture ou dans une composition alimentaire. Il peut également être utilisé comme réactif de départ pour la préparation de composés tels que par exemple le superphosphate simple ou triple, le phosphate de monoammonium ou le phosphate de diammonium, ou le phosphate de potassium, le phosphate de monocalcium (MCP) ou le phosphate mono-dicalcique (MDCP).

Le phosphate dicalcique 16 peut également être traité, de préférence à une température supérieure à 80°C, par une solution d'acide sulfurique 18 en 17 pour former une phase solide comprenant du sulfate de calcium et une phase aqueuse comprenant de l'acide phosphorique, subséquemment séparée l'une de l'autre par exemple par filtration. Le sulfate de calcium 24 ainsi obtenu comprend du sulfate de calcium hémihydrate qui peut être traité en 31 par une solution d'acide chlorhydrique 30. Après séparation, une solution aqueuse d'acide chlorhydrique 32 et une phase solide de sulfate de calcium dihydrate 33 sont obtenues. La phase solide de sulfate de calcium dihydrate 33 présente de faibles teneurs en éléments radioactifs ou en éléments métalliques. Le sulfate de calcium dihydrate 33 peut ainsi être utilisé dans un procédé de blanchiment du papier ou dans la préparation de plâtre ou de compositions destinée à la construction. La solution aqueuse d'acide chlorhydrique 32 comprend également des ions phosphates résiduels.

La solution de chlorure de calcium 15 peut être purifiée en 26 par l'ajout d'une base 25, par exemple de l'hydroxyde de calcium. Après séparation, par exemple par filtration, une phase solide 27 comprenant des impuretés et une phase aqueuse purifiée comprenant du chlorure de calcium 28 sont obtenues. La phase aqueuse purifiée comprenant du chlorure de calcium 28 peut être concentrée et/ou séchée pour obtenir du chlorure de calcium sous différentes formes (solution ou solide) à différentes concentrations. La phase aqueuse purifiée comprenant du chlorure de calcium 28 peut également être traitée en 29 par une solution d'acide sulfurique 34. La solution de chlorure de calcium 15 et le sulfate de calcium 24 peuvent également être ajouté en 29 pour former une phase aqueuse d'acide chlorhydrique 35 et une phase solide comprenant du sulfate de calcium dihydrate 36. La solution d'acide chlorhydrique 35, tout comme la solution d'acide chlorhydrique 32, peuvent être recyclée pour être utilisée en 3 dans l'étape de digestion de la source de phosphate. La phase solide comprenant du sulfate de calcium dihydrate 36 peut être utilisé comme le sulfate de calcium dihydrate 33.

Outre un sel de phosphate appauvri en éléments radioactifs, le présent procédé permet la préparation de chlorure de calcium, en solution ou sous forme solide, et/ou de sulfate de calcium dihydrate présentant chacun des teneurs en éléments radioactifs faibles. La préparation de ces composés et leur utilisation ultérieure est un autre avantage de la présente invention.

Selon un aspect alternatif de l'invention, lorsque ladite source de phosphate utilisée à l'étape a) du présent procédé est une source de phosphate secondaire telles que des cendres volantes issues de l'incinération d'os, de lisier ou de boues d'épuration comme décrit dans la présente demande, la digestion par une solution d'acide chlorhydrique (étape a)) forme une solution aqueuse comprenant des ions phosphates et des ions chlorures en solution. Celle-ci peut être isolée après l'étape b) du procédé. Cette solution est purifiée pour éliminer les ions chlorures pour produire de l'acide phosphorique ou du MCP. L'élimination des ions chlorures peut se faire selon les techniques de purification connues de l'homme du métier.

### Exemples

### Procédure pour déterminer les teneurs en éléments radioactifs par spectrométrie gamma

Les teneurs en Pb²¹⁰, K⁴⁰, Ra²²⁶ et Ra²²⁸ ont été déterminées par spectrométrie gamma. Les mesures ont été effectuées en présence d'un détecteur comprenant un cristal de germanium utra-pur (HPGe) de la marque Canberra (HPGe XtRa 50% d'efficacité relative ou HPGe BEGe 34% d'efficacité relative) et disposé à l'intérieur d'un dispositif de mesure contenant un blindage en plomb. Les mesures sont effectuées entre 3 keV et 3MeV pour un détecteur BEGe ou entre 3keV et >10 MeV pour un détecteur XtRa. Le détecteur est calibré à l'aide d'échantillons disposés dans des récipients de type Marinelli^{™} d'une contenance de 1 mL à 2,5 L. La détermination des teneurs en Ra²²⁶ a été effectuée par la mesure des radionucléides filles de Ra²²⁶. L'échantillon à analyser est mis en contact avec du charbon actif dans l'eau pour absorber le Ra²²⁶ présent dans l'échantillon. Le résidu solide a été disposé dans un container (HDPE coaxial - 250 mL) pendant 21 jours. La mesure de Ra²²⁶ a été effectuée à l'aide d'un détecteur de type Lucas cell. La teneur en K⁴⁰ est déterminée par la raie d'émission à 1460,82 keV. La teneur en Ra²²⁶ a été déterminée à partir des radionucléides filles Bi²¹⁴ et Pb²¹⁴ dont les raies d'émission considérées sont respectivement situées à 609,31 keV, 1120,28 keV et 1764,5 keV pour Bi²¹⁴ et à 241,99 keV, 295,22 keV et 351,93 keV pour Pb²¹⁴. La teneur en Ra²²⁸ a été déterminée en considérant les raies d'émission de Ac²²⁸ à 338,32 keV, 911,19 keV et 968,96 keV. La teneur en Pb²¹⁰ a été déterminée en considérant la raie d'émission à 46,5 keV.

### Procédure pour déterminer les teneurs en éléments radioactifs par spectrométrie alpha

Les teneurs en Po²¹⁰, Th²²⁸, Th²³⁰, Th²³², U²³⁴, U²³⁵, U²³⁸ ont été déterminées par spectrométrie alpha. Le détecteur est un détecteur au silicium également appelé « PIPS detector » de la marque Canberra. Lorsque l'échantillon à analyser est solide (par exemple DCP ou CaSO₄), 1 g de celui-ci est préalablement digéré par micro-ondes en présence d'un mélange comprenant 5 mL d'acide fluorhydrique, 5 mL d'acide chlorhydrique et 5 mL d'acide nitrique. Lorsque l'échantillon à analyser est liquide, celui-ci (10 mL) est traité par une solution aqueuse de FeCl₃ (1 mL d'une solution préparée à partir de 7,3 g/100 mL). Le précipité est centrifugé et calciné. Pour déterminer la teneur en polonium Po²¹⁰, l'échantillon préalablement traité comme mentionné ci-dessus est mélangé avec 0,25 L d'eau et 20 mL d'acide chlorhydrique (6 M), de l'acide ascorbique avant d'être déposé sur une surface d'argent sous agitation à une température comprise entre 80°C et 90°C pendant 6 heures. Pour déterminer les teneurs en uranium et thorium, l'échantillon est purifié sur une résine échangeuse d'ions (Biorad AG) en présence d'un traceur (Po²⁰⁸ ou Po²⁰⁹) pour éliminer le polonium et soumis à une seconde séparation entre l'uranium et le thorium sur une colonne comprenant une résine de type UTEVA^{®} (Eichrom) en présence d'un traceur U²³² et Th²²⁹.

### Procédure pour déterminer les teneurs en métaux de transition

Les teneurs en métaux dans un échantillon sont déterminés par spectrométrie d'émission optique (ICP-OES : Inductively coupled plasma optical émission spectrometry) utilisant un spectromètre Agilent 710 Axial série ICP optical émission spectrometer équipé d'un nébulisateur (One Neb insert concentric ICP) et d'une torche à plasma (lo-flw, Quartz, inlet tbg, axial). Les échantillons et les standards sont préparés dans des récipients préalablement nettoyés par une solution diluée d'acide nitrique (193 g d'acide nitrique à 96%, diluée jusqu'à 1000 mL avec de l'eau distillée).

L'appareillage est calibré par le protocole suivant en utilisant des solutions standard de Pb(NO₃)₂ avec une concentration en plomb de 100 mg/L, de Cd(NO₃)₂ avec une concentration en cadmium de 100 mg/L, de Hg(NO₃)₂ avec une concentration en mercure de 100 mg/L, de H₃AsO₄ avec une concentration en arsenic de 100 mg/L, et de Y(NO₃)₃ avec une concentration en yttrium de 100 mg/L. A partir de chacune des solutions de Pb(NO₃)₂, Cd(NO₃)₂, Hg(NO₃)₂ et H₃AsO₄ une série de 7 échantillons de calibration à 0,01 ppm, 0,05 ppm, 0,1 ppm, 0,5 ppm, 1 ppm et 5 ppm sont préparées. Dans chaque échantillon, 200 µL de la solution standard de Y(NO₃)₃ est ajouté puis chaque échantillon est dilué avec la solution diluée d'acide nitrique ci-dessus pour atteindre un volume de 100 mL.

### Préparation des échantillons de CaCl₂ à analyser par ICP-OES

Dans une fiole de 100 mL contenant 50 mL de la solution diluée d'acide nitrique telle que préparée ci-dessus, 10 g de CaCl₂ puis 200 µL de la solution standard de Y(NO₃)₃ sont ajoutés. Le volume est ensuite ajusté à 100 mL par l'addition de la solution diluée d'acide nitrique. La solution ainsi obtenue est agitée vigoureusement.

Préparation des échantillons de sel de phosphate selon la présente invention, de DCP et de gypse à analyser par ICP-OES

Dans une fiole de 100 mL contenant 25 mL de la solution diluée d'acide nitrique telle que préparée ci-dessus, 2 g de l'échantillon à analyser puis 10 mL d'une solution d'acide chlorhydrique à 37 % sont ajoutés. Si nécessaire, la solution obtenue peut être portée à ébullition pour dissoudre l'échantillon à analyser. 200 µL de la solution standard de Y(NO₃)₃ sont ajoutés et le volume est ajusté à 100 mL par l'addition de la solution diluée d'acide nitrique. La solution ainsi obtenue est agitée vigoureusement et optionnellement filtrée avant l'analyse de celui-ci si nécessaire.

### Exemple 1

Du minerai de phosphate d'origine nord-africaine présentant une teneur en P₂O₅ de 29% en poids est mis en oeuvre. L'attaque du minerai est effectuée à l'aide d'une solution aqueuse présentant une teneur pondérale en HCl de 12% à une température de 60°C. La quantité d'HCl ajouté est déterminée par un rapport molaire entre le HCl ajouté au minerai et le Ca présent dans celui-ci. L'attaque du minerai est réalisée à un rapport HCl/Ca de 1,8. Le temps de séjour dans le réacteur d'attaque est de 15 minutes. La liqueur d'attaque est alors transférée dans un filtre-presse où les matières insolubles (notées résidus dans le tableau 1 ci-dessous) sont séparées de la phase aqueuse. La température est maintenue à 60°C pour la filtration. La solution sortant du filtre-presse est acheminée vers un réacteur de neutralisation. Du carbonate de calcium est ajouté à un rapport molaire Ca/P de 1 et un pH de 2,5-3,0. Après 45 minutes de réaction et formation de phosphate dicalcique (DCP), le milieu réactionnel neutralisé est alors dirigé vers un filtre à bande. Le gâteau obtenu est séché et est constitué de DCP présentant les caractéristiques mentionnées ci-dessous, i.e. une faible teneur en éléments radioactifs et/ou faibles teneurs en métaux. Le DCP présente une teneur en P₂O₅ de 44% en poids (sur poids sec) et une teneur en calcium de 24% en poids (sur poids sec). Le filtrat est une solution aqueuse de chlorure de calcium à 15% en poids. La solution de chlorure de calcium peut être purifiée par l'ajout d'hydroxyde de calcium jusqu'à ce que le pH de la solution soit compris entre 9 et 10. Des matières insolubles comprenant principalement des sels de magnésium et des éléments radioactifs précipitent, appauvrissant ainsi la solution de chlorure de calcium en éléments radioactifs. Une solution de chlorure de calcium purifiée (15% en poids) est ainsi obtenue.

Le tableau 1 détaille les teneurs en éléments radioactifs du minerai, du phosphate dicalcique (DCP) obtenu, de la solution en chlorure de calcium (CaCl₂) et de la solution en chlorure de calcium purifiée (CaCl₂p) et des résidus issus de la filtration après l'étape de digestion du minerai (c'est-à-dire première phase solide). L'exemple 1 a été reproduit trois fois et les différents composés ci-dessus ont été analysés à chaque fois. Pour chaque élément radioactif, une valeur moyenne sur les trois essais a été déterminée et est reprise ci-dessous dans le tableau 1.

**Tableau 1 - Teneur en éléments radioactifs (Bq/kg) dans la roche, le DCP, CaCl₂, CaCl₂p et les résidus issus de la liqueur d'attaque selon le procédé de la présente invention.**

| | Minerai | DCP | Résidus | CaCl₂ | CaCl₂p |
|---|---|---|---|---|---|
| Po²¹⁰ | 607 | 120 | 1360 | 50 | 2 |
| Th²²⁸ | 54 | 6 | 225 | 0 | 0 |
| Th²³⁰ | 613 | 8 | 2620 | 0 | 0 |
| Th²³² | 52 | 0 | 223 | 0 | 0 |
| U²³⁴ | 593 | 387 | 1283 | 0,03 | 0,015 |
| U²³⁵ | 26 | 15 | 61 | 0 | 0 |
| U²³⁸ | 583 | 340 | 1377 | 0,03 | 0,009 |
| K⁴⁰ | 31 | 4 | 52 | 1 | 0 |
| Ra²²⁶ | 572 | 2 | 2127 | 0,38 | 0 |
| Ra²²⁸ | 51 | 0 | 188 | 0 | 0 |
| Pb²¹⁰ | 570 | 275 | 63 | 31 | 8 |

| | | | | | |
|---|---|---|---|---|---|
| *(0 = teneur en l'élément considéré inférieure à la limite de détection)* | | | | | |

Les résultats repris dans le tableau 1 démontrent sans ambiguïté que le procédé selon la présente invention permet la préparation d'un sel de phosphate appauvri en éléments radioactifs, i.e. une concentration en radionucléides plus faible. Une forte majorité des éléments radioactifs sont précipités dans les matières insolubles issues de la filtration de la liqueur d'attaque. La mise en oeuvre de l'étape de digestion du minerai à une température comprise entre 50 et 70 °C, par exemple 60 °C, permet de favoriser la précipitation des éléments radioactifs. Ainsi, outre le phosphate dicalcique, du chlorure de calcium, purifié ou non, présentant des concentrations en radionucléides, i.e. en éléments radioactifs, faibles est également obtenu. Les teneurs en éléments radioactifs dans le phosphate dicalcique obtenu selon l'invention sont inférieures aux teneurs mentionnées pour différents échantillons de DCP par Casacuberta et al. (Journal of hazardous materials, 2009, 170, 814-823). Le sel de phosphate selon la présente invention est donc plus pur que le DCP de l'art antérieur, lorsque la teneur en éléments radioactifs est prise en compte. En outre, la teneur en cadmium dans le DCP obtenu selon la présente invention était de 0,26 ppm.

### Exemple 2 (comparatif)

L'exemple 1 est reproduit en effectuant l'attaque du minerai et la filtration de la liqueur d'attaque à température ambiante. Les teneurs en éléments radioactifs sont nettement supérieures à celles obtenues dans le phosphate dicalcique selon la présente invention, i.e. lorsque les étapes a) et b) du présent procédé selon l'invention sont effectuées à une température comprise entre 50°C et 70°C. La teneur en uranium était supérieure à 1500 Bq/kg. En particulier, la teneur dans le DCP obtenu selon l'exemple 2 en K⁴⁰, Ra²²⁸, Th²³², Pb²¹⁰ et U²³⁴ était respectivement de 9 Bq/kg, 580 Bq/kg, 72 Bq/kg, 1170 Bq/kg et 900 Bq/kg. La teneur en polonium Po²¹⁰ était de 840 Bq/kg.

### Exemple 3

L'exemple 1 est reproduit à partir de minerai d'origine syrienne contenant une teneur en P₂O₅ de 30,9%. Un phosphate dicalcique ayant une teneur en P₂O₅ de 42% en poids et en calcium de 27% en poids est obtenu. Le phosphate dicalcique obtenu dans l'exemple 3 présente les mêmes caractéristiques, en terme de teneurs en éléments radioactifs, que le phosphate dicalcique de l'exemple 1. Le tableau 2 ci-dessous détaille les teneurs en métaux dans le phosphate dicalcique obtenu selon l'exemple 3. Le tableau détaille également les teneurs en métaux d'un phosphate dicalcique décrit dans WO2004/002888 produit par un procédé comparatif dans lequel les étapes de digestion et de filtration de la liqueur d'attaque sont effectuées à température ambiante.

**Tableau 2 - Teneur (en ppm) en métaux dans le phosphate dicalcique de l'exemple 3 et dans le phosphate dicalcique de WO2004/002888**

| | DCP (Ex. 3 - Invention) | DCP (comparatif WO2004/002888) |
|---|---|---|
| As | 1,5 | 2,01 |
| Ba | 3,5 | n.d. |
| Cd | 0,096 | 0,65 |
| Co | 0,94 | n.d. |
| Cr | 66 | 73 |
| Cu | 3,8 | 1,3 |
| Hg | <0,1 | n.d. |
| Mg | 20 | 23,5 |
| Mn | 3 | n.d. |
| Mo | 0,83 | n.d. |
| Ni | 2,2 | 3,5 |
| Pb | 1,3 | 3,7 |
| Sr | 240 | n.d. |
| Tl | <0,05 | n.d. |
| Zn | 34 | 36 |

Le procédé selon la présente invention permet de produite un sel de phosphate tel qu'un phosphate dicalcique dans lequel les teneurs en métaux sont réduites. Les teneurs en cadmium, arsenic et plomb sont fortement diminuées dans le phosphate dicalcique préparé par la présente invention. La teneur en magnésium dans le DCP représente moins de 1% du magnésium initialement présente dans le minerai de phosphate.

### Exemple 4 - Préparation de superphosphate simple SSP

Le phosphate dicalcique préparé selon l'exemple 1 peut être utilisé pour la préparation de superphosphate simple. Le phosphate dicalcique a été mélangé avec une solution d'acide sulfurique (0,5 équivalent molaire par rapport à la quantité de phosphate dicalcique) dans un mélangeur à double hélice à sens contraire. Le superphosphate simple (Ca(H₂PO₄)₂) obtenu avec une teneur en P₂O₅ compris entre 32 et 37% en poids est séché puis tamisé. Le superphosphate simple peut être utilisé en tant que tel comme engrais dans une composition destinée à l'agriculture. La quantité d'acide sulfurique peut être adaptée pour former, en présence d'un agent de masse, du superphosphate simple ayant une teneur en P₂O₅ comprise entre 16 et 18%.

### Exemple 5 - Préparation de superphosphate triple TSP

Le phosphate dicalcique préparé selon l'exemple 1 peut être utilisé pour la préparation de superphosphate triple. Le phosphate dicalcique a été mélangé avec une solution d'acide sulfurique (0,33 équivalent molaire par rapport à la quantité de phosphate dicalcique) et d'acide phosphorique (0,33 équivalent molaire par rapport à la quantité de phosphate dicalcique) dans un mélangeur à double hélice à sens contraire. Le superphosphate triple (Ca(H₂PO₄)₂) obtenu avec une teneur en P₂O₅ de 45% en poids est séché puis tamisé. Le superphosphate triple ainsi obtenu peut être utilisé en tant que tel comme engrais dans une composition destinée à l'agriculture.

### Exemple 6 - Préparation de monoammonium phosphate et diammonium phosphate (MAP/DAP)

Le phosphate dicalcique préparé selon l'exemple 1 peut être utilisé pour la préparation de phosphate de monoammonium et de phosphate de diammonium. Le phosphate dicalcique a été mélangé avec une solution d'acide sulfurique (1 équivalent molaire par rapport à la quantité de phosphate dicalcique) pour former de l'acide phosphorique en solution et un précipité de sulfate de calcium. Après filtration, de l'ammoniaque (entre 1 et 2 équivalents molaire par rapport à la quantité de phosphate dicalcique) est ajouté à la solution d'acide phosphorique. La proportion entre le phosphate de monoammonium et le phosphate de diammonium peut varier en fonction de la quantité d'ammoniaque ajoutée. Après séchage et granulation, le monoammonium phosphate et le diammonium phosphate sont utilisés en tant que tel comme engrais dans une composition destinée à l'agriculture.

### Exemple 7 - Préparation d'une composition de type NPK

Le phosphate dicalcique préparé selon l'exemple 1 peut être utilisé pour la préparation de composition de type NPK. Le phosphate dicalcique a été mélangé avec une solution d'acide sulfurique (1 équivalent molaire par rapport à la quantité de phosphate dicalcique) puis avec de l'ammoniaque et du chlorure de potassium. Les quantités d'ammoniaque et de chlorure de potassium ajoutées sont déterminées en fonction des teneurs en azote et potassium désirées dans la composition NPK final. Des compositions NPK 15/15/15, 10/10/10, 10/5/10 et 20/20/20 ont notamment été préparées. Les valeurs en phosphore et potassium représentent la quantité d'oxyde sous la forme de P₂O₅ ou K₂O qui aurait été présente dans la composition si tout le phosphore ou le potassium élémentaire avaient été oxydés dans ces formes. La valeur en azote est celle en poids d'azote élémentaire dans la composition.

### Exemple 8

L'exemple 1 a été reproduit à partir d'une roche de phosphate comprenant 2,3% en poids de magnésium. Le phosphate dicalcique obtenu présentait les mêmes caractéristiques que celles du phosphate dicalcique de l'exemple 1 en terme de teneurs en éléments radioactifs et en cadmium. De plus, moins de 0,7 % en poids du magnésium présent dans la roche de phosphate initialement étaient présent dans ce phosphate dicalcique.

### Exemple 9

La solution de chlorure de calcium purifié (CaCl₂p) obtenu à l'exemple 1 est traité avec une solution d'acide sulfurique (96 % en poids) pour former du gypse dihydrate CaSO₄, 2H₂O et une solution d'acide chlorhydrique. Le gypse dihydrate CaSO₄, 2H₂O est analysé et les teneurs en métaux et en éléments radioactifs sont reprises ci-dessous dans le tableau 3. Le gypse dihydrate CaSO₄, 2H₂O comprend une teneur en CaO de 32,7 % en poids et en SO₃ de 46,4 % en poids.

**Tableau 3 - Teneur en métaux (en ppm) et éléments radioactifs (Bq/kg) dans le gypse dihydrate CaSO₄, 2H₂O selon l'exemple 9**

| | |
|---|---|
| Magnésium (ppm) | 20 |
| Strontium (ppm) | 600 |
| P₂O₅. total (% en poids) | 0.042 |
| K⁴⁰ (Bq/kg) | < 16 |
| Ra²²⁸ (Bq/kg) | < 4 |
| Ra²²⁶ (Bq/kg) | <2.2 |
| Th²²⁸ (Bq/kg) | < 1.7 |
| U²³⁵ (Bq/kg) | < 1.2 |
| U²³⁸ (Bq/kg) | < 13 |

Le procédé selon la présente invention permet la préparation de gypse ayant une teneur en éléments radioactifs très faibles.

### Exemple 10

L'exemple 1 est répété en utilisant comme source de phosphate des cendres issues de la calcination des boues d'épuration. La teneur en phosphate dans la source de phosphate est de 23,6 % en poids de P₂O₅ de la source de phosphate. Le sel de phosphate obtenu est un phosphate dicalcique comprenant une teneur en phosphate de 33,1% en poids de P₂O₅ et 15% en poids de calcium dans le phosphate dicalcique. Les teneurs en cadmium, chrome et mercure dans le DCP obtenu sont respectivement de 0,28 ppm, 50 ppm et inférieur à 0,1 ppm. Les teneurs en éléments radioactifs sont similaires à celles obtenues pour le DCP obtenu dans l'exemple 1.

## Revendications

1. Procédé pour la préparation d'un sel de phosphate sous forme solide de formule Mₙ(HPO₄)y.zH₂O dans laquelle M est Na, K, NH₄, n = 2, et y = 1 ; ou M est Ca, n = 1, y = 1; ou M est Al ou Fe, n =2, y = 3 ; et dans laquelle z est 0, 1 ou 2; ledit sel de phosphate ayant une teneur en phosphate exprimée en teneur de P₂O₅ comprise entre 30 et 50% en poids du sel de phosphate, de préférence de 36 à 45% en poids, le sel de phosphate ayant une teneur en cadmium inférieure à 0,40 ppm, avantageusement inférieure à 0,30 ppm, de préférence inférieure à 0,20 ppm, en particulier inférieure à 0,10 ppm, le procédé comprenant les étapes suivantes :
a) une digestion d'une source de phosphate par une première solution aqueuse d'acide chlorhydrique avec formation d'une liqueur d'attaque constituée d'une phase aqueuse comprenant des ions phosphates et des ions chlorures en solution, et d'une première phase solide insoluble contenant des impuretés,
b) une première séparation entre la phase aqueuse comprenant des ions phosphates et des ions chlorures en solution et la première phase solide insoluble contenant des impuretés,
c) une neutralisation de ladite phase aqueuse comprenant des ions phosphates et des ions chlorures en solution à un pH suffisant pour former un milieu aqueux comprenant des ions chlorures et pour précipiter les ions phosphates sous forme dudit sel de phosphate,
d) une deuxième séparation entre ledit milieu aqueux comprenant les ions chlorures et ledit sel de phosphate,
**caractérisé en ce que** les étapes a) et b) sont effectuées à une température comprise entre 50°C et 70°C pour une durée inférieure à deux heures et **en ce que** ladite première solution aqueuse d'acide chlorhydrique présente une concentration de HCl entre 12 à 15% en poids
et **en ce que** la neutralisation effectuée à l'étape c) a une durée inférieure à une heure.

2. Procédé selon la revendication 1 dans lequel le sel de phosphate obtenu,
• sous la forme d'agrégats de particules solides ayant un diamètre compris entre 500 µm et 5 mm, avantageusement entre 500 µm et 3 mm, de préférence entre 1 mm et 2 mm ; ou
• sous la forme d'agrégats de particules solides ayant un diamètre inférieur à 500 µm, avantageusement un diamètre compris entre 50 µm et 500 µm, de préférence entre 100 µm et 200 µm.

3. Procédé selon la revendication 1 ou 2, dans lequel
- la teneur en Ra²²⁶ dans ledit sel de phosphate est inférieure à 100 Bq/kg, avantageusement inférieure à 50 Bq/kg, de préférence inférieure à 10 Bq/kg, en particulier inférieure à 5 Bq/kg, et/ou
- la teneur en magnésium est inférieure ou égale à 20 ppm, et/ou
- la teneur en uranium dans ledit sel de phosphate est inférieure à 1500 Bq/kg, de préférence inférieure à 1000 Bq/kg, en particulier inférieure à 800 Bq/kg, la teneur en uranium étant déterminée par les teneurs respectives en U²³⁴, U²³⁵ et U²³⁸, et/ou
- la teneur en Pb²¹⁰ dans ledit sel de phosphate est inférieure à 1500 Bq/kg, avantageusement inférieure à 1000 Bq/kg, de préférence inférieure à 800 Bq/kg, en particulier inférieure à 500 Bq/kg, et/ou
- la teneur en polonium Po²¹⁰ dans ledit sel de phosphate est inférieure à 300 Bq/kg, avantageusement inférieure à 200 Bq/kg, de préférence inférieure à 150 Bq/kg.

4. Procédé selon l'une des revendications précédentes, **caractérisé en ce que** le sel de phosphate est un sel de phosphate de calcium ayant de préférence une teneur en calcium comprise entre 15 et 30% en poids.

5. Procédé selon l'une quelconque des revendications précédentes, **caractérisé en ce que** le sel de phosphate présente en outre une ou plusieurs des teneurs en impuretés métalliques suivantes :
• une teneur en strontium est inférieure à 280 ppm ou
• une teneur en nickel est inférieure à 3 ppm ou
• une teneur en thallium est inférieure à 5 ppm ou
• une teneur en plomb est inférieure à 3 ppm ou
• une teneur en manganèse inférieure à 15 ppm ou
• une teneur en molybdène inférieure à 3 ppm.

6. Procédé selon l'une quelconque des revendications précédentes, **caractérisé en ce que** l'étape a) a une durée inférieure à une heure, avantageusement inférieure à 30 minutes, de préférence comprise entre 5 et 20 minutes.

7. Procédé selon l'une quelconque des revendications précédentes, **caractérisé en ce que** :
- ladite source de phosphate comprend une teneur en magnésium supérieure à 1,5 % en poids sur base du poids total de la source de phosphate, et/ou
- ladite source de phosphate de l'étape a) est sélectionnée parmi le groupe consistant en le minerai de phosphate ou des sources de phosphate secondaires telles que des cendres ou toute autre matière première contenant plus de 10% de phosphate exprimée en teneur en poids de P₂O₅ dans la source de phosphate.

8. Procédé selon l'une quelconque des revendications précédentes, **caractérisé en ce que** :
- dans la liqueur d'attaque, le rapport molaire entre HCl et Ca est compris entre 1,2 et 2,6, de préférence entre 1,6 et 2,4.

9. Procédé selon l'une quelconque des revendications précédentes, **caractérisé en ce que** ladite neutralisation de l'étape c) :
- est réalisée en présence de carbonate de calcium, d'hydroxyde de calcium, de l'oxyde de calcium ou d'un ou plusieurs sels de calcium, de sodium ou d'ammonium, et/ou
- est réalisée en présence de carbonate de calcium, d'hydroxyde de calcium, de l'oxyde de calcium ou d'un sel de calcium soluble dans l'eau ; ledit sel de phosphate précipité étant un sel de phosphate de calcium et ledit milieu aqueux comprend des ions chlorures et des ions calcium et/ou
- est réalisée en présence de carbonate de calcium, d'hydroxyde de calcium, de l'oxyde de calcium ou d'un sel de calcium soluble dans l'eau ; ledit sel de phosphate précipité étant un sel de phosphate de calcium et ledit milieu aqueux est une solution de chlorure de calcium présentant une teneur en chlorure de calcium comprise entre 8 et 20 % en poids de la solution, avantageusement entre 12 et 20 % en poids, de préférence 15 % en poids, et/ou
- est réalisée en présence de carbonate de calcium, d'hydroxyde de calcium, de l'oxyde de calcium ou d'un sel de calcium soluble dans l'eau ; ledit sel de phosphate précipité étant un sel de phosphate de calcium et ledit milieu aqueux comprend des ions chlorures et des ions calcium formant une solution de chlorure de calcium ; et **en ce qu'**un composé basique choisi parmi l'hydroxyde de calcium, l'oxyde de calcium et les sels de calcium, de sodium, de potassium ou d'ammonium est ajouté à ladite solution de chlorure de calcium pour former une solution purifiée de chlorure de calcium ayant un pH compris entre 8 et 12, et une phase solide comprenant des impuretés comprenant des sels de magnésium.

10. Procédé selon l'une quelconque des revendications précédentes, **caractérisé en ce que** :
- à l'étape c), le pH est inférieur à 5, avantageusement compris entre 2,0 et 5,0, avantageusement compris entre 2,5 et 4,0, de préférence entre 2,5 et 3,0, et/ou
- un composé basique est ajouté audit milieu aqueux comprenant des ions chlorures obtenu à l'étape d) pour former une phase aqueuse purifiée comprenant des ions chlorures et de pH compris entre 8 et 12, de préférence entre 9 et 10, et une phase solide comprenant des impuretés.

11. Procédé selon l'une quelconque des revendications précédentes précédentes, **caractérisé en ce qu'**il comprend en outre les étapes :
g) une attaque de tout ou partie dudit sel de phosphate obtenu à l'étape d) par une solution aqueuse d'acide fort pour former une suspension d'un premier acide phosphorique en solution et une seconde phase solide,
h) une troisième séparation entre le premier acide phosphorique et ladite seconde phase solide.

12. Procédé selon la revendication 11 **caractérisé en ce qu'**à l'étape e) le rapport molaire entre la solution aqueuse d'acide fort et ledit sel de phosphate obtenu à l'étape d) est compris entre 0,6 et 1,6.

13. Procédé selon l'une quelconque des revendications 11 ou 12 **caractérisé en ce que** la solution aqueuse d'acide fort utilisé à l'étape e) est une solution aqueuse d'acide sulfurique et la seconde phase solide formée à l'étape e) comprend du sulfate de calcium hémihydrate, du sulfate de calcium dihydrate ou un mélange de ceux-ci, de préférence l'addition d'acide sulfurique audit sel de phosphate et optionnellement d'eau pour former l'acide phosphorique, se fait avec un rapport molaire entre l'acide sulfurique et ledit sel de phosphate est compris entre 0,9 et 1,1.

14. Procédé selon l'une des revendications 11 à 13 **caractérisé en ce que** la seconde phase solide obtenue à l'étape f) et comprenant du sulfate de calcium hémihydrate, du sulfate de calcium dihydrate ou un mélange de ceux-ci, est mélangée à une solution acide pour former une phase solide comprenant du sulfate de calcium dihydrate et une phase aqueuse acide comprenant des ions phosphates.

15. Procédé selon la revendication 14 **caractérisé en ce que**
- la solution acide est une solution d'acide sulfurique et la seconde phase solide obtenue à l'étape f) est également mélangée à ladite phase aqueuse purifiée selon la revendication 9 ou 10 , ou audit milieu aqueux comprenant des ions chlorures obtenu à l'étape d) ou audit milieu aqueux comprenant des ions chlorures et des ions calcium selon la revendication 10, ou leurs mélanges pour former une phase solide comprenant du sulfate de calcium dihydrate et une phase aqueuse comprenant de l'acide chlorhydrique, et/ou
- la phase aqueuse comprenant de l'acide chlorhydrique est recyclée pour former tout ou partie de ladite première solution aqueuse d'acide chlorhydrique utilisée à l'étape a).

16. Procédé selon l'une quelconque des revendications précédentes pour la production,
• d'un ingrédient dans une composition destinée à l'agriculture, de préférence de composés fertilisants comprenant un groupement phosphate,
• d'un ingrédient dans une composition alimentaire, ou
• d'un produit de départ pour la préparation d'acide phosphorique, de phosphate monocalcique, de phosphate mono-dicalcique, de superphosphate simple ou superphosphate triple, de sels de phosphate d'ammonium, de sels de phosphate de potassium.

17. Procédé selon la revendication 16 pour la production
- d'une composition alimentaire comprenant en outre une substance alimentaire de base, ou
- d'une composition destinée à l'agriculture comprenant en outre une source de potassium et/ou une source d'azote pour former de préférence une composition fertilisante, en particulier une composition fertilisante liquide, ou une composition partiellement ou totalement soluble dans l'eau.

18. Procédé selon la revendication 17, comprenant le mélange du sel de phosphate obtenu avec
- une substance alimentaire de base, ou
- avec une source de potassium et/ou une source d'azote.

19. Procédé selon la revendication 16, comprenant une étape suivant la production du sel de phosphate, choisie parmi :
- addition d'acide sulfurique et optionnellement d'acide phosphorique, d'eau, audit sel de phosphate pour former un superphosphate simple (SSP), ou
- addition d'acide sulfurique et d'ammoniaque ou d'un sel d'ammonium audit sel de phosphate pour former un phosphate de monoammonium ou un phosphate de diammonium, de préférence l'acide sulfurique est ajouté préalablement à l'ammoniaque, ou
- addition d'acide sulfurique, d'une source d'azote ou d'une source de potassium ou les deux, audit sel de phosphate pour former une composition de type NPK, ou
- addition d'acide phosphorique et optionnellement d'acide sulfurique, d'eau, audit sel de phosphate pour former superphosphate triple (TSP), ou
- addition d'une source de potassium audit sel de phosphate et optionnellement d'un acide pour former un phosphate de potassium.

20. Procédé selon la revendication 16 pour la préparation de phosphate monocalcique (MCP) ou de phosphate monodicalcique (MDCP) comprenant une addition d'acide phosphorique au sel de phosphate obtenu pour former le phosphate monocalcique, avec :
- le rapport en poids entre l'acide phosphorique et ledit sel de phosphate est compris entre 0,5 et 0,65, pour la préparation de phosphate monocalcique (MCP) ; ou
- le rapport en poids entre l'acide phosphorique et ledit sel de phosphate est inférieur à 0,5 pour la préparation de phosphate mono-dicalcique (MDCP).

## Patentansprüche

1. Verfahren zur Herstellung eines Phosphatsalzes in feststofflicher Form mit der Formel Mn(HPO₄)_{y}.zH₂O, wobei M für Na, K, NH₄ steht, n = 2 ist und y = 1 ist; oder M für Ca steht, n = 1 ist, y = 1 ist; oder M für Al oder Fe steht, n = 2 ist, y = 3 ist; und wobei z gleich 0, 1 oder 2 ist; wobei das Phosphatsalz einen Phosphatgehalt, ausgedrückt als P₂O₅-Gehalt, im Bereich von 30 bis 50 Gewichts-% des Phosphatsalzes, vorzugsweise 36 bis 45 Gewichts-% hat, wobei das Phosphatsalz einen Cadmiumgehalt von weniger als 0,40 ppm, vorteilhafterweise weniger als 0,30 ppm, vorzugsweise weniger als 0,20 ppm, insbesondere weniger als 0,10 ppm hat, wobei das Verfahren die folgenden Schritte umfasst:
a) einen Verdau einer Phosphatquelle durch eine erste wässrige Salzsäurelösung, wobei sich eine Aufschlusslösung, die aus einer wässrigen Phase besteht, welche Phosphationen und Chloridionen in Lösung umfasst, und eine erste unlösliche feststoffliche Phase, die Verunreinigungen enthält, bilden,
b) eine erste Trennung der wässrigen Lösung, welche Phosphationen und Chloridionen umfasst, von der ersten unlöslichen feststofflichen Phase, die Verunreinigungen enthält,
c) eine Neutralisierung der wässrigen Phase, welche Phosphationen und Chloridionen in Lösung umfasst, auf einen pH-Wert, der ausreicht, um ein wässriges Milieu zu bilden, das Chloridionen umfasst, und um die Phosphationen in Form des Phosphatsalzes auszufällen,
d) eine zweite Trennung des wässrigen Milieus, welches die Chloridionen umfasst, von dem Phosphatsalz,
**dadurch gekennzeichnet, dass** die Schritte a) und b) bei einer Temperatur im Bereich von 50 °C bis 70 °C über eine Dauer von weniger als zwei Stunden durchgeführt werden und dadurch, dass die erste wässrige Salzsäurelösung eine HCl-Konzentration zwischen 12 und 15 Gew.-% aufweist, und dadurch, dass die Neutralisierung, welche im Schritt c) durchgeführt wird, eine Dauer von weniger als einer Stunde hat.

2. Verfahren nach Anspruch 1, wobei das erhaltene Phosphatsalz
• in Form von Aggregaten feststofflicher Partikel einen Durchmesser im Bereich von 500 µm bis 5 mm, vorteilhafterweise von 500 µm bis 3 mm, vorzugsweise von 1 mm bis 2 mm hat; oder
• in Form von Aggregaten feststofflicher Partikel einen Durchmesser von weniger als 500 µm, vorteilhafterweise im Bereich von 50 µm bis 500 µm, vorzugsweise von 100 µm bis 200 µm hat.

3. Verfahren nach dem Anspruch 1 oder 2, wobei
- der Gehalt an Ra²²⁶ in dem Phosphatsalz weniger als 100 Bq/kg, vorteilhafterweise weniger als 50 Bq/kg, vorzugsweise weniger als 10 Bq/kg, insbesondere weniger als 5 Bq/kg beträgt, und/oder
- der Gehalt an Magnesium höchstens 20 ppm beträgt, und/oder
- der Gehalt an Uran in dem Phosphatsalz weniger als 1500 Bq/kg, vorzugsweise weniger als 1000 Bq/kg, insbesondere weniger als 800 Bq/kg beträgt, wobei der Gehalt an Uran anhand der jeweiligen Gehalte an U²³⁴, U²³⁵ und U²³⁸ bestimmt wird, und/oder
- der Gehalt an Pb²¹⁰ in dem Phosphatsalz weniger als 1500 Bq/kg, vorteilhafterweise weniger als 1000 Bq/kg, vorzugsweise weniger als 800 Bq/kg, insbesondere weniger als 500 Bq/kg beträgt, und/oder
- der Gehalt an Polonium Po²¹⁰ in dem Phosphatsalz weniger als 300 Bq/kg, vorteilhafterweise weniger als 200 Bq/kg, vorzugsweise weniger als 150 Bq/kg beträgt.

4. Verfahren nach einem der vorhergehenden Ansprüche, **dadurch gekennzeichnet**, es sich bei dem Phosphatsalz um ein Calciumphosphatsalz handelt, das vorzugsweise einen Gehalt an Calcium im Bereich von 15 bis 30 Gewichts-% hat.

5. Verfahren nach einem beliebigen der vorhergehenden Ansprüche, **dadurch gekennzeichnet, dass** das Phosphatsalz darüber hinaus einen oder mehrere der folgenden Gehalte an metallischen Verunreinigungen aufweist:
• einen Gehalt an Strontium ist weniger als 280 ppm oder
• einen Gehalt an Nickel ist weniger als 3 ppm oder
• einen Gehalt an Thallium ist weniger als 5 ppm oder
• einen Gehalt an Blei ist weniger als 3 ppm oder
• einen Gehalt an Mangan von weniger als 15 ppm oder
• einen Gehalt an Molybdän von weniger als 3 ppm.

6. Verfahren nach einem beliebigen der vorhergehenden Ansprüche, **dadurch gekennzeichnet, dass** der Schritt a) eine Dauer von weniger als einer Stunde, vorteilhafterweise weniger als 30 Minuten, vorzugsweise im Bereich von 5 bis 20 Minuten hat.

7. Verfahren nach einem beliebigen der vorhergehenden Ansprüche, **dadurch gekennzeichnet, dass**:
- die Phosphatquelle einen Gehalt an Magnesium von mehr als 1,5 Gewichts-% umfasst, bezogen auf das Gesamtgewicht der Phosphatquelle, und/oder
- die Phosphatquelle des Schrittes a) aus der Gruppe ausgewählt ist, die aus Phosphaterz oder sekundären Phosphatquellen wie etwa Aschen oder einem beliebigen anderen Rohstoff besteht, der mehr als 10 % an Phosphat enthält, ausgedrückt als Gehalt nach Gewicht an P₂O₅ in der Phosphatquelle.

8. Verfahren nach einem beliebigen der vorhergehenden Ansprüche, **dadurch gekennzeichnet, dass**:
- in der Aufschlusslösung das Molverhältnis zwischen HCl und Ca im Bereich von 1,2 bis 2,6, vorzugsweise von 1,6 bis 2,4 liegt.

9. Verfahren nach einem beliebigen der vorhergehenden Ansprüche, **dadurch gekennzeichnet, dass** die Neutralisierung im Schritt c):
- in Gegenwart von Calciumcarbonat, Calciumhydroxid, Calciumoxid oder eines oder mehrerer Salze von Calcium, Natrium oder Ammonium durchgeführt wird, und/oder
- in Gegenwart von Calciumcarbonat, Calciumhydroxid, Calciumoxid oder eines wasserlöslichen Calciumsalzes durchgeführt wird; wobei es sich bei dem ausgefällten Phosphatsalz um ein Calciumphosphatsalz handelt und das wässrige Milieu Chloridionen und Calciumionen umfasst und/oder
- in Gegenwart von Calciumcarbonat, Calciumhydroxid, Calciumoxid oder eines wasserlöslichen Calciumsalzes durchgeführt wird; wobei es sich bei dem ausgefällten Phosphatsalz um ein Calciumphosphatsalz handelt und es sich bei dem wässrigen Milieu um eine Calciumchloridlösung handelt, die eine Calciumchloridgehalt im Bereich von 8 bis 20 Gewichts-% an der Lösung, vorteilhafterweise von 12 bis 2° Gewichts-%, vorzugsweise von 15 Gewichts-% aufweist, und/oder
- in Gegenwart von Calciumcarbonat, Calciumhydroxid, Calciumoxid oder eines wasserlöslichen Calciumsalzes durchgeführt wird; wobei es sich bei dem ausgefällten Phosphatsalz um ein Calciumphosphatsalz handelt und das wässrige Milieu Chloridionen und Calciumionen umfasst, die eine Calciumchloridlösung bilden; und dadurch, dass eine basische Verbindung, welche aus Calciumhydroxid, Calciumoxid und Salzen von Calcium, Natrium, Kalium oder Ammonium ausgewählt ist, der Calciumchloridlösung zugesetzt wird, um eine aufgereinigte Calciumchloridlösung mit einem pH-Wert im Bereich von 8 bis 12 und eine feststoffliche Phase zu bilden, welche Verunreinigungen umfasst, die Magnesiumsalze umfassen.

10. Verfahren nach einem beliebigen der vorhergehenden Ansprüche, **dadurch gekennzeichnet, dass**:
- der pH-Wert im Schritt c) niedriger als 5 ist, wobei er vorteilhafterweise im Bereich von 2,0 bis 5,0, vorteilhafterweise im Bereich von 2,5 bis 4,0, vorzugsweise von 2,5 bis 3,0 liegt, und/oder
- dem wässrigen Milieu, welches Chloridionen umfasst, wobei es im Schritt d) erhalten wurde, eine basische Verbindung zugesetzt wird, um eine aufgereinigte wässrige Phase, die Chloridionen umfasst, wobei ihr pH-Wert im Bereich von 8 bis 12, vorzugsweise von 9 bis 10 liegt, und eine feststoffliche Phase zu erhalten, die Verunreinigungen umfasst.

11. Verfahren nach einem beliebigen der vorhergehenden vorhergehenden Ansprüche, **dadurch gekennzeichnet, dass** es darüber hinaus die folgenden Schritte umfasst:
g) einen Aufschluss einer Teilmenge oder der Gesamtheit des Phosphatsalzes, welches im Schritt d) erhalten wurde, mit einer wässrigen Lösung einer starken Säure, um eine Suspension aus einer ersten in Lösung befindlichen Phosphorsäure und einer zweiten feststofflichen Phase zu bilden,
h) eine dritte Trennung der ersten Phosphorsäure von der zweiten feststofflichen Phase.

12. Verfahren nach Anspruch 11, **dadurch gekennzeichnet, dass** im Schritt e) das Molverhältnis zwischen der wässrigen Lösung einer starken Säure und dem Phosphatsalz, welches im Schritt d) erhalten wurde, im Bereich von 0,6 bis 1,6 liegt.

13. Verfahren nach einem beliebigen der Ansprüche 11 oder 12, **dadurch gekennzeichnet, dass** es sich bei der wässrigen Lösung einer starken Säure, wie sie im Schritt e) verwendet wird, um eine wässrige Schwefelsäurelösung handelt und die zweite feststoffliche Phase, welche im Schritt e) gebildet wird, Calciumsulfat-Hemihydrat, Calciumsulfat-Dihydrat oder eine Mischung davon umfasst, wobei der Zusatz von Schwefelsäure zu dem Phosphatsalz, und möglicherweise von Wasser, zur Bildung von Phosphorsäure derart erfolgt, dass das Molverhältnis zwischen der Schwefelsäure und dem Phosphatsatz im Bereich von 0,9 bis 1,1 liegt.

14. Verfahren nach einem der Ansprüche 11 bis 13, **dadurch gekennzeichnet, dass** die zweite feststoffliche Phase, welche im Schritt f) erhalten wird und Calciumsulfat-Hemihydrat, Calciumsulfat-Dihydrat oder eine Mischung davon umfasst, mit einer sauren Lösung vermischt wird, um eine feststoffliche Phase, welche Calciumsulfat-Dihydrat umfasst, und eine saure wässrige Phase zu bilden, welche Phosphationen umfasst.

15. Verfahren nach Anspruch 14, **dadurch gekennzeichnet, dass**
- es sich bei der sauren Lösung um eine Schwefelsäurelösung handelt und die zweite feststoffliche Phase, welche im Schritt f) erhalten wird, ebenfalls der aufgereinigten wässrigen Phase nach Anspruch 9 oder 10, oder dem wässrigen Milieu, welches Chloridionen umfasst und im Schritt d) erhalten wurde, oder dem wässrigen Milieu, welches Chloridionen und Calciumionen umfasst, nach Anspruch 10, oder deren Mischungen beigemischt wird, um eine feststoffliche Phase, welche Calciumsulfat-Dihydrat umfasst, und eine wässrige Phase zu bilden, welche Salzsäure umfasst, und/oder
- die wässrige Phase, welche Salzsäure umfasst, zurückgeführt wird, um eine Teilmenge oder die Gesamtheit der ersten wässrigen Salzsäurelösung zu bilden, wie sie im Schritt a) verwendet wird.

16. Verfahren nach einem beliebigen der vorhergehenden Ansprüche, für die Herstellung
• eines Inhaltsstoffs einer Zusammensetzung, welche für die Landwirtschaft bestimmt ist, vorzugsweise von düngend wirkenden Verbindungen, die eine Phosphatgruppe umfassen,
• eines Inhaltsstoffs einer Lebensmittelzusammensetzung, oder
• eines Ausgangsstoffs für die Herstellung von Phosphorsäure, von Monocalciumphosphat, Monodicalciumphoshat, einfachem Superphosphat oder Tripelsuperphosphat, Ammoniumphosphatsalzen, Kaliumphosphatsalzen.

17. Verfahren nach Anspruch 16, für die Herstellung
- einer Lebensmittelzusammensetzung, die darüber hinaus eine grundlegende Lebensmittelsubstanz umfasst, oder
- einer Zusammensetzung, welche für die Landwirtschaft bestimmt ist, wobei sie darüber hinaus eine Kaliumquelle und/oder eine Stickstoffquelle umfasst, um vorzugsweise eine düngend wirkende Zusammensetzung, insbesondere eine flüssige düngend wirkende Zusammensetzung, oder eine Zusammensetzung zu bilden, die teilweise oder vollständig in Wasser löslich ist.

18. Verfahren nach Anspruch 17, wobei es das Vermischen des erhaltenen Phosphatsalzes mit Folgendem umfasst
- einer grundlegenden Lebensmittelsubstanz, oder
- einer Kaliumquelle und/oder Stickstoffquelle.

19. Verfahren nach Anspruch 16, wobei es im Anschluss an die Herstellung des Phosphatsalzes einen Schritt umfasst, der aus den folgenden ausgewählt ist:
- Zusetzen von Schwefelsäure und möglicherweise von Phosphorsäure, sowie von Wasser, zu dem Phosphatsalz, um ein einfaches Superphosphat (SSP) zu bilden, oder
- Zusetzen von Schwefelsäure und von Ammoniaklösung oder eines Ammoniumsalzes zu dem Phosphatsalz, um ein Monoammoniumphosphat oder ein Diammoniumphosphat zu bilden, wobei vorzugsweise die Schwefelsäure vor der Ammoniaklösung zugesetzt wird, oder
- Zusetzen von Schwefelsäure, einer Stickstoffquelle oder einer Kaliumquelle oder von beidem zu dem Phosphatsalz, um eine Zusammensetzung des Typs NPK zu bilden, oder
- Zusetzen von Phosphorsäure und möglicherweise von Schwefelsäure, sowie von Wasser, zu dem Phosphatsalz, um Tripelsuperphosphat (TSP) zu bilden, oder
- Zusetzen einer Kaliumquelle zu dem Phosphatsalz sowie möglicherweise einer Säure, um ein Kaliumphosphat zu bilden.

20. Verfahren nach Anspruch 16, für die Herstellung von Monocalciumphosphat (MCP) oder von Monodicalciumphosphat (MDCP), wobei es ein Zusetzen von Phosphorsäure zum erhaltenen Phosphatsalz umfasst, um das Monocalciumphosphat zu bilden, wobei:
- das Gewichtsverhältnis zwischen der Phosphorsäure und dem Phosphatsalz im Bereich von 0,5 bis 0,65 liegt, um Monocalciumphosphat (MCP) herzustellen; oder
- das Gewichtsverhältnis zwischen der Phosphorsäure und dem Phosphatsalz weniger als 0,5 beträgt, um Monodicalciumphosphat (MDCP) herzustellen.

## Claims

1. Process for the preparation of a phosphate salt in solid form of formula Mn(HPO₄)y.zH₂O in which M is Na, K, NH₄, n = 2, and y = 1; or M is Ca, n = 1, y = 1; or M is Al or Fe, n = 2, y = 3; and in which z is 0, 1 or 2; said phosphate salt having a content of phosphate expressed in content of P₂O₅ of between 30% and 50% by weight of the phosphate salt, preferably from 36% to 45% by weight, the phosphate salt having a content of cadmium of less than 0.40 ppm, advantageously less than 0.30 ppm, preferably less than 0.20 ppm, in particular less than 0.10 ppm, the process comprising the following steps:
a) digestion of a phosphate source by a first aqueous hydrochloric acid solution with formation of an attack liquor consisting of an aqueous phase comprising phosphate ions and chloride ions in solution, and of a first insoluble solid phase containing impurities,
b) a first separation between the aqueous phase comprising phosphate ions and chloride ions in solution and the first insoluble solid phase containing impurities,
c) neutralization of said aqueous phase comprising phosphate ions and chloride ions in solution to a pH sufficient for forming an aqueous medium comprising chloride ions and for precipitating the phosphate ions in the form of said phosphate salt,
d) a second separation between said aqueous medium comprising the chloride ions and said phosphate salt,
**characterized in that** steps a) and b) are performed at a temperature of between 50°C and 70°C for a duration of less than two hours and **in that** said first aqueous hydrochloric acid solution has a concentration of HCl between 12% and 15% by weight
and **in that** the neutralization performed in step c) has a duration of less than one hour.

2. Process according to Claim 1, in which the phosphate salt obtained is
• in the form of aggregates of solid particles having a diameter of between 500 um and 5 mm, advantageously between 500 um and 3 mm, preferably between 1 mm and 2 mm; or
• in the form of aggregates of solid particles having a diameter of less than 500 um, advantageously a diameter of between 50 um and 500 µm, preferably between 100 um and 200 µm.

3. Process according to Claim 1 or 2, in which
- the content of Ra²²⁶ in said phosphate salt is less than 100 Bq/kg, advantageously less than 50 Bq/kg, preferably less than 10 Bq/kg, in particular less than 5 Bq/kg, and/or
- the content of magnesium is less than or equal to 20 ppm, and/or
- the content of uranium in said phosphate salt is less than 1500 Bq/kg, preferably less than 1000 Bq/kg, in particular less than 800 Bq/kg, the content of uranium being determined by the respective contents of U²³⁴, U²³⁵ and U²³¹, and/or
- the content of Pb²¹⁰ in said phosphate salt is less than 1500 Bq/kg, advantageously less than 1000 Bq/kg, preferably less than 800 Bq/kg, in particular less than 500 Bq/kg, and/or
- the content of polonium Po²¹⁰ in said phosphate salt is less than 300 Bq/kg, advantageously less than 200 Bq/kg, preferably less than 150 Bq/kg.

4. Process according to one of the preceding claims, **characterized in that** the phosphate salt is a calcium phosphate salt preferably having a content of calcium of between 15% and 30% by weight.

5. Process according to any one of the preceding claims, **characterized in that** the phosphate salt also has one or more of the following contents of metal impurities:
• a content of strontium is less than 280 ppm or
• a content of nickel is less than 3 ppm or
• a content of thallium is less than 5 ppm or
• a content of lead is less than 3 ppm or
• a content of manganese of less than 15 ppm or
• a content of molybdenum of less than 3 ppm.

6. Process according to any one of the preceding claims, **characterized in that** step a) has a duration of less than one hour, advantageously less than 30 minutes, preferably of between 5 and 20 minutes.

7. Process according to any one of the preceding claims, **characterized in that**:
- said phosphate source comprises a content of magnesium of greater than 1.5% by weight based on the total weight of the phosphate source, and/or
- said phosphate source of step a) is selected from the group consisting of phosphate ore or secondary phosphate sources such as ashes or any other raw material containing more than 10% of phosphate expressed in content by weight of P₂O₅ in the phosphate source.

8. Process according to any one of the preceding claims, **characterized in that**:
- in the attack liquor, the molar ratio between HCl and Ca is between 1.2 and 2.6, preferably between 1.6 and 2.4.

9. Process according to any one of the preceding claims, **characterized in that** said neutralization of step c):
- is carried out in the presence of calcium carbonate, calcium hydroxide, calcium oxide or one or more calcium, sodium or ammonium salts, and/or
- is carried out in the presence of calcium carbonate, calcium hydroxide, calcium oxide or a calcium salt soluble in water; said precipitated phosphate salt being a calcium phosphate salt and said aqueous medium comprises chloride ions and calcium ions and/or
- is carried out in the presence of calcium carbonate, calcium hydroxide, calcium oxide or a calcium salt soluble in water; said precipitated phosphate salt being a calcium phosphate salt and said aqueous medium is a calcium chloride solution having a content of calcium chloride of between 8% and 20% by weight of the solution, advantageously between 12% and 20% by weight, preferably 15% by weight, and/or
- is carried out in the presence of calcium carbonate, calcium hydroxide, calcium oxide or a calcium salt soluble in water; said precipitated phosphate salt being a calcium phosphate salt and said aqueous medium comprises chloride ions and calcium ions forming a calcium chloride solution; and **in that** a basic compound chosen from calcium hydroxide, calcium oxide and calcium, sodium, potassium or ammonium salts is added to said calcium chloride solution in order to form a purified calcium chloride solution having a pH of between 8 and 12, and a solid phase comprising impurities comprising magnesium salts.

10. Process according to any one of the preceding claims, **characterized in that**:
- in step c), the pH is less than 5, advantageously between 2.0 and 5.0, advantageously between 2.5 and 4.0, preferably between 2.5 and 3.0, and/or
- a basic compound is added to said aqueous medium comprising chloride ions obtained in step d) in order to form a purified aqueous phase comprising chloride ions and with a pH of between 8 and 12, preferably between 9 and 10, and a solid phase comprising impurities.

11. Process according to any one of the preceding preceding claims, **characterized in that** it also comprises the steps:
g) attack of all or part of said phosphate salt obtained in step d) by an aqueous strong acid solution in order to form a suspension of a first phosphoric acid in solution and a second solid phase,
h) a third separation between the first phosphoric acid and said second solid phase.

12. Process according to Claim 11, **characterized in that** in step e) the molar ratio between the aqueous strong acid solution and said phosphate salt obtained in step d) is between 0.6 and 1.6.

13. Process according to either one of Claims 11 and 12, **characterized in that** the aqueous strong acid solution used in step e) is an aqueous sulfuric acid solution and the second solid phase formed in step e) comprises calcium sulfate hemihydrate, calcium sulfate dihydrate or a mixture of these, preferably the addition of sulfuric acid to said phosphate salt and optionally of water in order to form the phosphoric acid is effected with a molar ratio between the sulfuric acid and said phosphate salt is between 0.9 and 1.1.

14. Process according to one of Claims 11 to 13, **characterized in that** the second solid phase obtained in step f) and comprising calcium sulfate hemihydrate, calcium sulfate dihydrate or a mixture of these is mixed with an acid solution in order to form a solid phase comprising calcium sulfate dihydrate and an aqueous acid phase comprising phosphate ions.

15. Process according to Claim 14, **characterized in that**
- the acid solution is a sulfuric acid solution and the second solid phase obtained in step f) is also mixed with said purified aqueous phase according to Claim 9 or 10, or with said aqueous medium comprising chloride ions obtained in step d) or with said aqueous medium comprising chloride ions and calcium ions according to Claim 10, or mixtures thereof in order to form a solid phase comprising calcium sulfate dihydrate and an aqueous phase comprising hydrochloric acid, and/or
- the aqueous phase comprising hydrochloric acid is recycled in order to form all or part of said first aqueous hydrochloric acid solution used in step a).

16. Process according to any one of the preceding claims for the production
• of an ingredient in a composition intended for agriculture, preferably of fertilizer compounds comprising a phosphate group,
• of an ingredient in a food composition, or
• of a starting material for the preparation of phosphoric acid, monocalcium phosphate, monodicalcium phosphate, single superphosphate or triple superphosphate, ammonium phosphate salts, potassium phosphate salts.

17. Process according to Claim 16 for the production
- of a food composition also comprising a basic food substance, or
- of a composition intended for agriculture also comprising a potassium source and/or a nitrogen source in order to form preferably a fertilizer composition, in particular a liquid fertilizer composition, or a composition partially or completely soluble in water.

18. Process according to Claim 17, comprising the mixing of the phosphate salt obtained with
- a basic food substance, or
- with a potassium source and/or a nitrogen source.

19. Process according to Claim 16, comprising a step following the production of the phosphate salt, chosen from:
- addition of sulfuric acid and optionally of phosphoric acid, of water, to said phosphate salt in order to form a single superphosphate (SSP), or
- addition of sulfuric acid and of ammonia or of an ammonium salt to said phosphate salt in order to form a monoammonium phosphate or a diammonium phosphate, preferably sulfuric acid is added before ammonia, or
- addition of sulfuric acid, of a nitrogen source or of a potassium source or both to said phosphate salt in order to form an NPK composition, or
- addition of phosphoric acid and optionally of sulfuric acid, of water, to said phosphate salt in order to form triple superphosphate (TSP), or
- addition of a potassium source to said phosphate salt and optionally of an acid in order to form a potassium phosphate.

20. Process according to Claim 16 for the preparation of monocalcium phosphate (MCP) or monodicalcium phosphate (MDCP), comprising addition of phosphoric acid to the phosphate salt obtained in order to form the monocalcium phosphate, where:
- the weight ratio between the phosphoric acid and said phosphate salt is between 0.5 and 0.65, for the preparation of monocalcium phosphate (MCP); or
- the weight ratio between the phosphoric acid and said phosphate salt is less than 0.5 for the preparation of monodicalcium phosphate (MDCP).
